(19) Europäisches Patentamt
European Patent Office
Office européen des brevets

(11) **EP 1 758 697 B1**

(12) **EUROPÄISCHE PATENTSCHRIFT**

(45) Veröffentlichungstag und Bekanntmachung des Hinweises auf die Patenterteilung:
**25.01.2012 Patentblatt 2012/04**

(21) Anmeldenummer: 05759926.8

(22) Anmeldetag: **12.05.2005**

(51) Int Cl.:
*B21D 28/20* (2006.01)      *B21D 28/02* (2006.01)
*B23D 15/00* (2006.01)      *B23D 35/00* (2006.01)

(86) Internationale Anmeldenummer:
**PCT/DE2005/000869**

(87) Internationale Veröffentlichungsnummer:
**WO 2005/120741 (22.12.2005 Gazette 2005/51)**

(54) **VERFAHREN UND PRESSE ZUM SCHNEIDEN VON HOCHFESTEM BLECH**

METHOD AND PRESS FOR CUTTING HIGH-STRENGTH SHEET METAL

PROCEDE ET PRESSE DE DECOUPE DE TOLE A HAUTE RESISTANCE

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **02.06.2004   DE 102004027017**

(43) Veröffentlichungstag der Anmeldung:
**07.03.2007   Patentblatt 2007/10**

(73) Patentinhaber:
• **Fellenberg, Stefan**
  **10719 Berlin (DE)**
• **Jürgen, Fahrenbach**
  **73101 Aichelberg (DE)**
• **Schaller, Hans-Jörg**
  **50259 Pulheim (DE)**

(72) Erfinder:
• **Fellenberg, Stefan**
  **10719 Berlin (DE)**
• **Fahrenbach, Jürgen**
  **73101 Aichelberg (DE)**
• **Schaller, Hans-Jürgen**
  **71665 Vaihingen (DE)**

(56) Entgegenhaltungen:
**EP-A- 0 475 923      DE-A1- 2 729 047**
**DE-A1- 2 804 185      DE-A1- 2 808 091**
**DE-A1- 10 252 625      DE-A1- 19 639 220**
**FR-A- 2 690 097      GB-A- 923 811**
**US-A- 2 290 743      US-A- 4 156 377**
**US-A- 5 105 696**

**Beschreibung**

FR 2 690 097 A offenbart eine Vorrichtung zum Biegeschneiden eines Werkstrücken

In der Praxis stellt, sich zunehmend die Aufgabe, hochfeste wenig oder nicht duktile Bleche, insbesondere martensitisch gehärtete Bleche (Stahlbleche) durch Scheren zu trennen. Dies ist beispielsweise im Rahmen der Herstellung von hochfesten Kraftfahrzeug-Karosserieteilen erforderlich, wie sie zunehmend Anwendung finden. Zum Trennen solcher hochfesten Bleche werden in der Praxis gerne Laserschneidanlagen eingesetzt. Diese haben jedoch eine begrenzte Produktivität.

Der Versuch, solche martensitisch gehärteten Bleche mittels Stanzwerkzeugen entlang vorgegebener Schnittkonturen zu trennen, führt zu extremem Verschleiß an den Schneidkanten des Stanzwerkzeugs. Außerdem sind die so erzeugten Schneidkanten häufig ungenau oder rau. Dieser Nachteil entfällt beim Schneiden mittels Laserschneidanlage, wobei jedoch die Integration von Laserschneidanlagen z.B. in Umformwerkzeuge für Karosserieteile zumindest schwierig ist. Außerdem geben Umformanlagen, wie beispielsweise Stufenpressen; dann den Arbeitstakt vor, so dass für die auszuführenden Schneidvorgänge nur sehr kurze Zeitspannen zur Verfügung stehen.

Davon ausgehend ist es Aufgabe der Erfindung, ein schnelles und verlässliches Verfahren zum Schneiden von hochfesten Blechen anzugeben, das eine gute Standzeit der verwendeten Schneidwerkzeuge ermöglicht.

Diese Aufgabe wird mit dem Verfahren nach Anspruch 1 wie mit der Presse nach Anspruch 3 gelöst:

Das erfindungsgemäße Verfahren beruht auf einem herkömmlichen Schervorgang, bei dem ein Werkstück durch Einleiten ausreichend großer Schubspannungen zerteilt wird. Erfindungsgemäß werden diesen Schubspannungen Zugspannungen überlagert, die die Einleitung der Werkstücktrennung begünstigen. Diese Zugspannung bzw. Zugkraftkomponente wirkt quer zu der gewünschten, zu erzeugenden Biegelinie. Die Zugspannungen werden vorzugsweise durch eine Biegebeanspruchung des Werkstücks erzeugt. Die Biegebeanspruchung wird dabei vorzugsweise derart gewählt, dass die entstehende Zugspannung an einer dem Schneidwerkzeug zugewandten Seite des Werkstücks liegt.

Durch die gleichzeitige Biegebeanspruchung und Scherbeanspruchung des zu trennenden Werkstücks wird die Ausbildung einer Trennebene in dem zu trennenden Werkstück wesentlich begünstigt. Es kommt zu einer drastischen Verminderung der Schnittkräfte und einer ebenso drastischen Verminderung des Werkzeugverschleißes bei gleichzeitiger Verbesserung der Schnittflächenqualität.

Vorzugsweise wird das Biegemoment auf einen so großen Wert festgelegt, dass die Zugspannung die Bruchgrenze des zu trennenden Materials gerade eben noch nicht erreicht. Für ein derart vorgespanntes Material genügt dann eine relativ geringe Schubspannung zur Einleitung und Durchführung des Trennvorgangs.

Bei einer bevorzugten Ausführungs- und Durchführungsform der Erfindung wird ein auf einer Seite der Schnittkontur liegender Blechabschnitt zwischen einem Niederhalter und einer Auflagefläche fest eingespannt. Der fest eingespannte Teil des Blechs ist vorzugsweise der Nutzteil, während der jenseits der Schnittlinie ausragende nicht eingespannte Teil vorzugsweise das Abfallstück bildet. Der Niederhalter wird dabei vorzugsweise mit einer derart großen Niederhalterkraft beaufschlagt, dass die durch die Vorbiegung in das Blech eingeleiteten Zugspannungen in unmittelbarer Nachbarschaft zu der Schnittkontur drastisch reduziert wird. Es hat sich herausgestellt, dass es zweckmäßig ist, wenn das Verhältnis zwischen Niederhalterkante und Blechdicke etwa 6 beträgt.

Die Vorbiegung des Blechs vor Durchführung des eigentlichen Trennvorgangs kann unmittelbar vor Durchführung des Schneidvorgangs erfolgen. Dazu kann an dem eigentliche Schneidwerkzeug ein Vorsprung vorgesehen sein, der bei Durchführung des Schneidvorgangs, kurz bevor die Schneidkante des Schneidwerkzeugs auf das Blech trifft, bereits auf dem Blech aufsetzt. In diesem Fall sind der Abstand des Vorsprungs von der Schneidkante und die Voreilung in Bezug auf die Schneidkante so gewählt, dass die Zugspannung in dem zu trennenden Blech an der Schnittkontur die blechtypische Fließspannung gerade noch nicht erreicht hat, wenn die Schneidkante auf dem Blech auftrifft. Dazu hat es sich als zweckmäßig herausgestellt, wenn der Abstand zwischen der Schneidkante und dem Vorsprung in einem Größenbereich liegt, der auf die Blechdicke und die Größe des Vorsprungs abgestimmt ist.

Alternativ ist es möglich, die Vorbiegeeinrichtung von dem Schneidmesser getrennt auszubilden. Beispielsweise kann dies mit einem gesonderten Element erfolgen, das unabhängig von dem Schneidmesser bewegbar ist. Dieses Element kann vor Beginn des Scheervorgangs dazu genutzt werden, eine geeignete Biegespannung und somit, Zugspannung in das Blech einzuleiten. Das betreffende Element kann sowohl positionsgeregelt als auch kraftgeregelt bewegt werden. In ersterem Fall kann es das Blech vorbiegen und dann in dieser Position stehen bleiben, während von dem Schneidmesser getrennt wird. Alternativ kann der Ort, d.h. die Position des entsprechenden vorspannenden Elements auch kontrolliert während des Schneidvorgangs des Schneidmessers verlagert werden.

Im Falle der kontrollierten Kraftbeaufschlagung ist das Vorbiegeelement beispielsweise durch hydraulische Elemente fallbezogen einstellbar. Es ist dann möglich, die Vorbiegekraft während des Schneidvorgangs konstant zu halten oder nach einem vorgegebenen Zeitprofil oder einem vorgegebenen, von der Position des Schneidmessers abhängigen Profil zu variieren. Alle genannten Einflussgrößen können zu einer Optimierung der Werkzeugstandzeit und der Qualität der zu erzeugenden Trennfläche genutzt werden.

Das geeignete Verfahren kann sowohl in einer gesonderten Schervorrichtung als auch in Stanzvorrichtungen oder als Teil eines sonstigen Umformwerkzeugs Anwendung finden. Entsprechend kann die Vorrichtung als eine Schervorrichtung, eine Stanzvorrichtung oder auch als ein Teil eines Umformwerkzeugs, beispielsweise innerhalb einer Blechteilstufenpresse, ausgebildet sein.

Beim Stanzen von dicken Blechen treten zwischen Stößel und Stanzwerkzeug zeitlich sehr stark schwankende Kräfte auf. So lange das Material des Werkstücks dem Stempel widersteht, ist eine sehr hohe Kraft vorhanden, wodurch Teile der Presse elastisch verformt werden. Dies betrifft den Pressentisch, das Stanzwerkzeug, die Pressenständer, das Pressenkopfstück und in gewissem Maße auch den Stößel nebst Pleuel und Exzenterwelle. Wenn das Werkstück unter der Wirkung des Stempels nachgibt, wird die in den genannten Elementen elastisch gespeicherte Energie relativ unkontrolliert frei. Um diesen Vorgang des plötzlichen Durchbrechens des Stempels durch das Werkstück besser kontrollieren zu können, schlägt die DE 102 52 625 A1 ein System zur Schnittschlagreduzierung vor, hei dem in dem Werkzeug eine Anzahl von Hydraulikzylindern vorgesehen sind. Diese können unterhalb, oberhalb oder seitlich von dem Werkstück angeordnet sein. Sensoren, wie beispielsweise Ultraschallsensoren, oder auch Sensoren, die die Strömungsgeschwindigkeit der aus den Hydraulikzylindern ausströmenden Hydraulikflüssigkeit messen schließen ein Ventil, durch das bislang Hydraulikflüssigkeit aus den Hydraulikzylindern ausströmen konnte. Die Hydraulikzylinder sind mit Druckspeichern verbunden, die unter relativ hohem Druck stehen. Sie erzeugen deshalb nunmehr eine hohe Gegenkraft. Die bislang von dem Stempel auf das Werkstück ausgeübte Kraft wird somit in dem Moment auf die Hydraulikzylinder übergeleitet, in dem die Stempel beginnen, durch das Werkstück durchzubrechen.

Dieser Weg zur Schnittschlagdämpfung hat sich grundsätzlich bewährt. Jedoch ist die Einstellung der Sensoren zur Erfassung des Werkstückdurchbruchs kritisch. Auch ist bei Anordnung der Hydraulikzylinder neben dem Werkzeug noch ein gewisser Schnittschlag vorhanden, der weiter reduziert werden soll.

Davon ausgehend ist es Aufgabe der Erfindung, den genannten Stand der Technik zu verbessern.

Diese Aufgabe wird mit der Presse nach Anspruch 3 sowie nach Anspruch 10 gelöst:

Die Presse weist nach .Anspruch 1 eine Blechhalteeinrichtung auf, die das Werkzeug während des Umformvorgangs gegen das Unterwerkzeug presst. Das Unterwerkzeug ist beispielsweise ein Stanzwerkzeug während das Oberwerkzeug beispielsweise ein Stempel ist. Die Blechhalteeinrichtung ist in der Lage, unterschiedliche Kräfte auszuuben. Eine der Blechhalteeinrichtung zugeordnete Steuereinrichtung kann die von der Blechhalteeinrichtung ausgeübte Kraft beeinflussen.

Zu der Blechhalteeinrichtung gehört in der Regel eine Niederhalterplatte, die sich unmittelbar an dem Werkstück abstützt. Die Niederhalterplatte erstreckt sich bis in unmittelbare Nachbarschaft zu den Stempeln (Stanzstempeln) und somit dicht bis an den zu erzeugenden Schnitt heran. Damit, soll das Blech in unmittelbarer Schnittnähe fest zwischen der Niederhalterplatte und dem Unterwerkzeug (Stanzwerkzeug) eingeklemmt werden, um eine hohe Schnittqualität zu erreichen. Bei der efindungsgemäßen Presse übernimmt die Blechhalteeinrichtung nach dem Durchbruch der Stempel durch das Werkstück die von dem Stößel aufgebrachte Kraft während dieser seinen unteren Totpunkt durchläuft und speichert die von dem Stößel dadurch abgegebene Energie zwischen. Bei dem Rückhub des Stößels wird diese Energie an den Stößel und somit an den Pressenantrieb zurück gegeben. Durch die so erreichte Vermeidung der unkontrollierten Freisetzung der in der Presse elastisch gespeicherten Energie, wird der Pressenantrieb insgesamt entlastet, d.h. es wird Energie eingespart. Außerdem wird die mechanische Belastung der Presse durch Vermeidung zu großer plötzlicher Kraftänderungen vermindert. Des Weiteren gelingt durch die Überleitung der bis zum Werkstückdurchbruch auf die Stempel ausgeübten Kraft auf die Blechhalteeinrichtung eine besonders feste Klemmung des Werkstücks gerade während des Durchbruchs, so dass sich besonders hohe Schnittqualitäten ergeben. Außerdem kann die Kraft über die Blechhalteeinrichtung besondere großflächig und somit schonend in das Werkstück eingeleitet werden, so dass unerwünschte Deformationen desselben, wie beispielsweise Quetschungen und dergleichen, vermieden werden können.

Eine weitere Verbesserung bringt Anspruch 10 mit sich. Dieser ermöglicht insbesondere die Erzielung hoher Hubzahlen wird der Moment des Durchbruchs des Stößels durch das Werkstück, d.h. der Moment in dem das Werkstück nachgibt, erkannt, indem beispielsweise von Abstützeinrichtungen mit Hydraulikzylindern abgegebenes Hydraulikfluid hinsichtlich seines Volumenstroms überwacht wird; ist im Moment des Durchbruchs ein steiler Anstieg des Volumenflusses zu verzeichnen. Jedoch kann der dabei auftretende Volumenfluss durchaus unterhalb eines Wertes liegen, der bei schnellen Hubzahlen beim Aufsetzen des Stößels auf die Abstützeinrichtung auftritt, die beispielsweise als Blechhalteeinrichtung ausgebildet sein kann. Erfindungsgemäß gibt die Steuereinrichtung deshalb die Beeinflussung der von der Abstützeinrichtung aufgebrachten Kraft nur innerhalb eines festgelegten Wegabschnitts der Stößelbewegung frei. Auf diese Weise werden Fehlerkennungen, die ansonsten zu groben Fehlfunktionen der Presse führen würden, sicher ausgeschlossen. Der festgelegte Wegabschnitt weist vorzugsweise einen einstellbaren Anfang $\varphi1$ oder x1 auf. Außerdem kann er vorzugsweise ein variabel einstellbares Ende $\varphi2$ oder x2 aufweisen. Außerdem kann seine Länge variabel und einstellbar sein.

Damit kann die Presse auf einfache Weise an unterschiedliche Gegebenheiten, insbesondere hinsichtlich der Arbeitsgeschwindigkeit bzw. Hubzahl und der Blechdicke eingestellt werden.

Vorzugsweise weisen die Blechhalteeinrichtung bzw. die Abstützeinrichtung einen Hydraulikzylinder auf, der mit einem ersten und mit einem zweiten hydraulischen Druckspeicher verbunden ist. Beide Druckspeicher weisen z.B. einen verschiebbar gelagerten Kolben mit gedämpftem Endanschlag auf. Alternativ können Membranspeichereinrichtungen oder Speichereinrichtungen vorgesehen werden, bei denen ein Gasdruckpolster direkt mit dem Hydraulikfluid in Verbindung steht. Beide Druckspeicher weisen vorzugsweise unterschiedliche Ruhedrücke auf. Der von dem Hydraulikzylinder zu dem Druckspeicher mit niedrigerem Druck führende Weg ist vorzugsweise durch ein Ventil reguliert, das den Fluidfluss d.h. den Massenstrom überwacht und schließt, wenn dieser einen Grenzwert überschreitet. Dieses durchflussempfindliche Ventil ist eine vorteilhafte Variante für eine Sensoreinrichtung, die zur Erfassung des Durchbruchs des Werkstücks dient. Es zeigt das Überschreiten eines Geschwindigkeitsschwellwertes der Relativbewegung zwischen dem Oberwerkzeug (Stempel) und dem Werkstück an. Alternative Sensorsysteme können Anwendung finden, wie beispielsweise Beschleunigungssensoren an dem Stößel oder an dem Stempel, Wegsensoren, die die Stößelbewegung erfassen und ein entsprechendes zeitveränderliches Signal abgeben. Es wird dann die Änderungsrate dieses Signals bestimmt und als Indikator für den Stanzdurchbruch genutzt.

Eine entsprechende Wegmesseinrichtung oder sonstige Gebereinrichtung kann außerdem zur Gewinnung eines Signals genutzt werden, anhand dessen das Aktivierungsfenster festgelegt wird, innerhalb dessen der Stanzdurchbruch erwartet wird. Die Überwachung auf Stanzdurchbruch erfolgt dann nur in diesem Aktivierungsfenster während außerhalb des Aktivierungsfensters die Abstützeinrichtung passiv ist bzw. die Blechhalteeinrichtung ausschließlich ihre Blechhaltefunktion erfüllt.

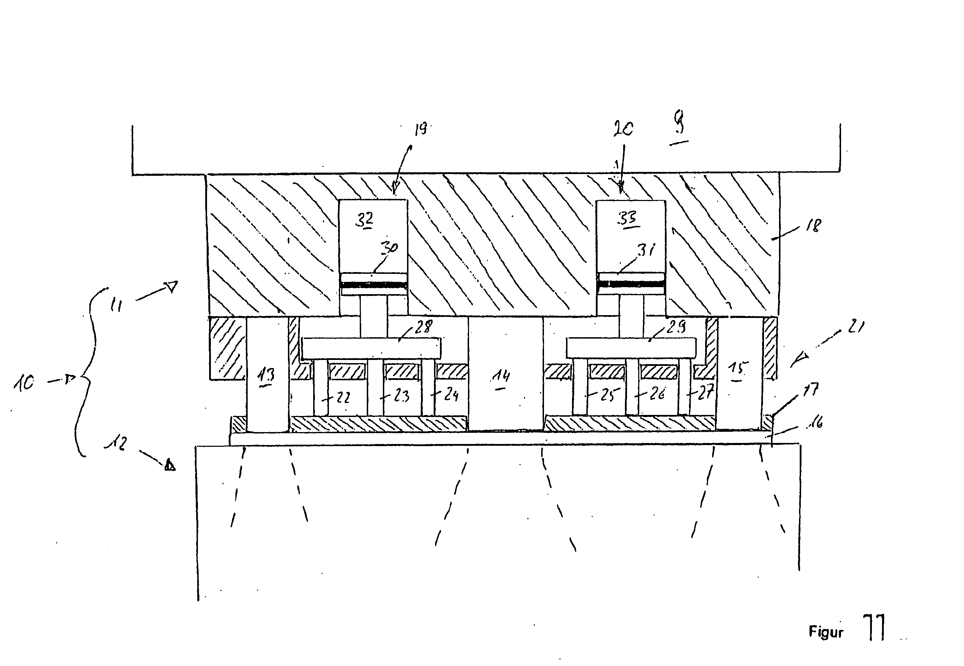

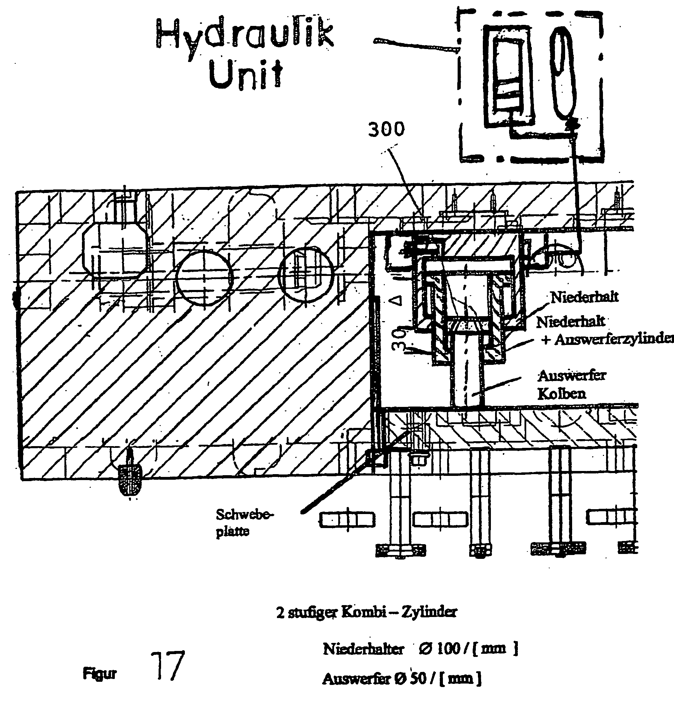

In Figur 17 wird ein Werkzeuggestell gezeigt, dass aus Werkzeugzwischenplatte und Werkzeugoberplatte besteht. Der Niederhalter und Presskrafthaltezylinder 30, der ebenfalls in Figur 11 gezeigt wird, wirkt als Auswerfer, nachdem der Weg delta(Δ) zurückgelegt ist, wobei der Niederhalter hierzu die Ölkanäle 300 benötigt.

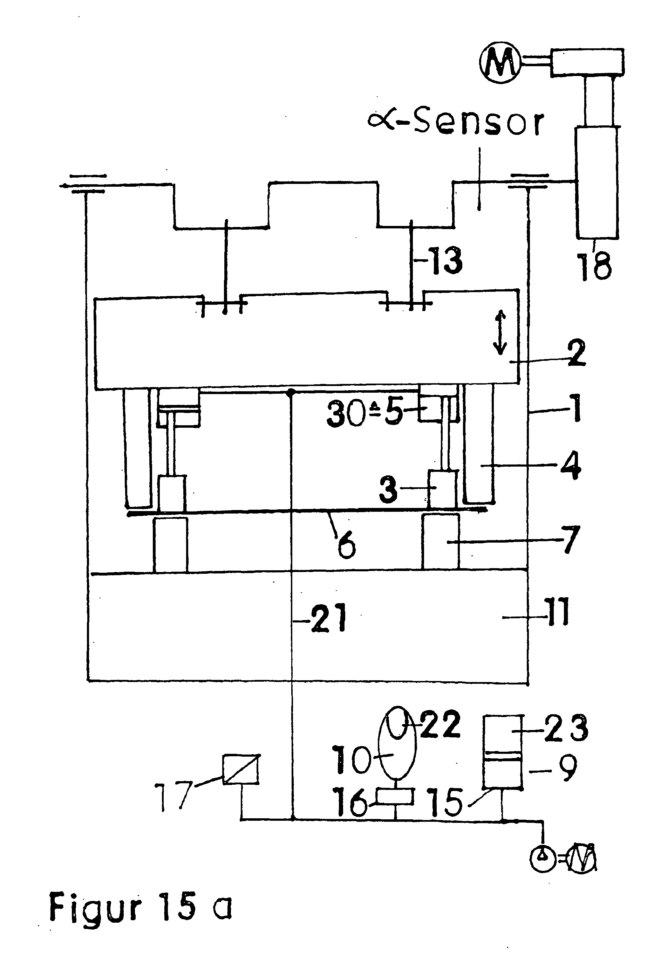

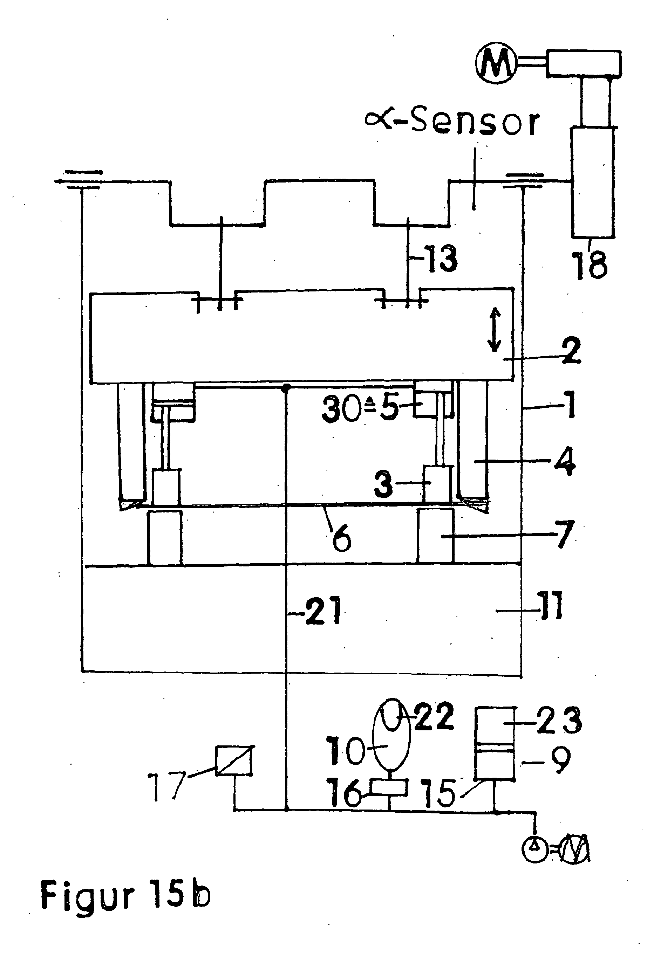

Bezugszeichenliste Figur 15

1. Presse, Körper
2. Stößel
3. Niederhalter
4. Schneidbacken, Schneidmesser
5. Niederhalterzylinder
6. Blech Werkstück
7. Matrize, unterer Schneidbacken
8. Ölversorgung, Pumpe, Motor, Druckbegrenzungsventil
9. Hochdruckkolbenspeicher mit Endlagendämpfung
10. Niederdruckspeicher
11. Tisch
12. Pressenrahmen
13. Pleuel
14. Verbindungsleitungen
15. Endlagendämpfung im Hydrospeicher Hochdruck
16. Strömungsventil, Jetconventil
17. Druckschalter
18. Schwungrad
19. Hauptmotor
20. Antriebsriemen
21. Öl, Fluid
22. Stickstoff, Niederdruck
23. Stickstoff, Hochdruck
24. abgesetzter Stempel1
25. abgesetzter Stempel2

Weitere Einzelheiten vorteilhafter Ausführungsformen der Erfindung ergeben sich aus der Zeichnung, der Beschreibung oder aus Ansprüchen. In der Zeichnung sind Ausführungsbeispiele der Erfindung veranschaulicht. Es zeigen:

Figur 1     eine Blechteilstufenpresse in schematisierter Frontalansicht,

Figur 2     die Draufsicht auf ein schematisch veranschaulichtes Werkstück,

Figur 3 bis 4     ein Werkzeug zum Trennen von Blechteilen für die Stufenpresse gemäß Figur 1 in schematisierter vertikal geschnittener, ausschnittsweiser Darstellung in verschiedenen Arbeitsstadien beim Trennen des Blechteil,

Figur 5 bis 8     eine abgewandelte Ausführungsform des Werkzeugs für die Stufenpresse nach Figur 1 in schematisierter, vertikal geschnittener, ausschnittsweiser Darstellung in verschiedenen Arbeitsstadien und

Figur 9     das Werkstück während des Trennvorgangs in vergrößerter, ausschnittsweiser, schematisierter Darstellung.

Figur 10     die erfindungsgemäße Presse in schematisierter Übersichtsdarstellung, in den Varianten gemäß Fig. 10a und 10b, einer

Figur 11     das Werkzeug der Presse nach Figur 1 in schematisierten Vertikalschnittdarstetlung,

Figur 12      eine Vorrichtung zum Schneiden von hochfesten Blechen gemäß dem Stand der Technik,

Figur 13      ein Ventil zur Überwachung eines von dem Werkzeug nach Figur 2 erzeugten Hydraulikfluidflusses und

Figur 14      Diagramme zur Veranschaulichung der Abhängigkeit des Stößelhubs vom Pressenwinkel sowie des Massenstroms des aus der Blechhalteeinrichtung verdrängten Hydraulikfluids,

Figur 15      schematische Darstellung einer Presse in den Varianten gemäss Figuren 15a und 15b,

Figur 16      Stempel in schematischer Darstellung und

Figur 17      Niederhalter und Auswerfer.

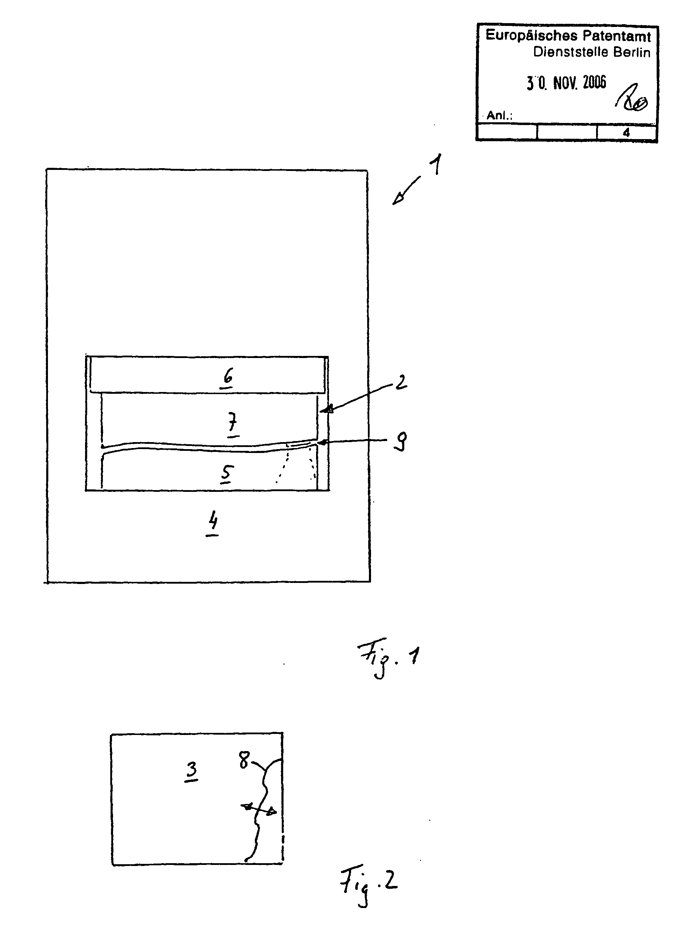

In Figur 1 ist eine Stufenpresse 1 zum Umformen von Blechteilen mit Blick auf ein dazu vorgesehenes Werkzeug 2 veranschaulicht. Das Werkzeug 2 dient der Durchführung zumindest einer Trennoperation und gegebenenfalls weiterer Umformopcrationen. Außerdem kann die Stufenpresse L weitere Werkzeuge aufweisen, wobei das Werkstück 3 (schematisch veranschaulicht in Figur 2) dann von Werkzeug zu Werkzeug weiter gegeben wird. Eine dazu vorgesehene Transfereinrichtung ist nicht weiter veranschaulicht.

Das Werkzeug 2 weist ein auf einem Pressentisch 4 ortsfest gelagertes Unterwerkzeug 5 und ein an dem Stößel 6 der Presse gelagertes Oberwerkzeug 7 auf. Im Arbeitstakt der Presse öffnet und schließt das Werkzeug 2, wobei dabei jeweils ein Werkstück bearbeitet wird. Beim Schließen des Werkzeugs 2 setzt das Oberwerkzeug 7 auf dem Unterwerkzeug 5 auf.

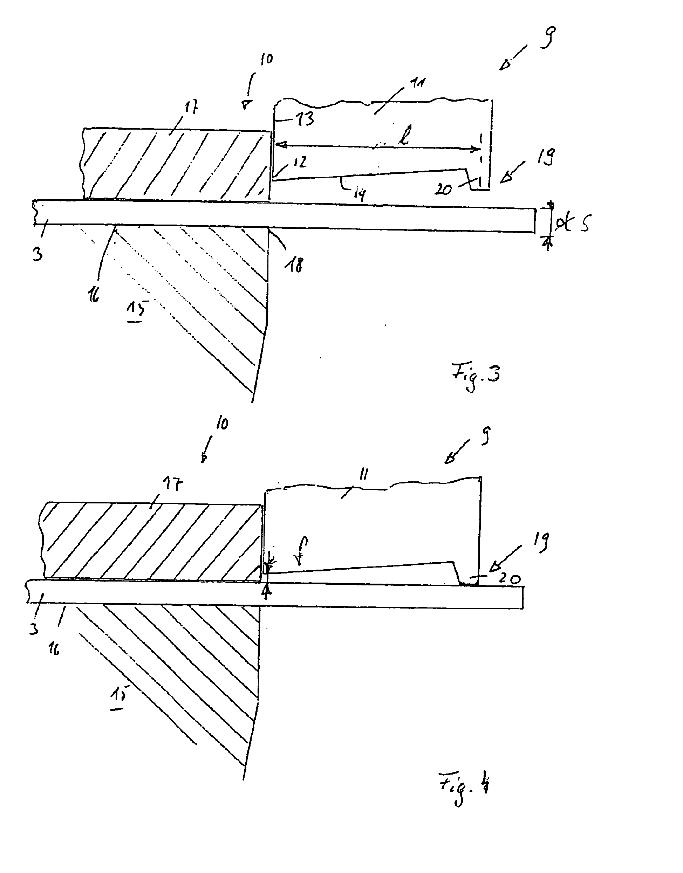

Bei der Bearbeitung des Werkstücks 3 ist an diesem eine Schnittoperation durchzuführen und zwar entlang einer in Figur 2 schematisch veranschaulichten Schnittkontur 8. Diese kann gerade oder krummlinig begrenzt sein. Durch Durchführung des Schnittvorgangs weist das Werkzeug 2, wie aus Figur 3 ersichtlich, eine Schneideinrichtung 9 auf. Zu dieser gehören eine Werkzeugklemmeinrichtung 10 und ein Schneidemesser 11. Das Schneidemesser 11 kann auch als Schneidstempel bezeichnet werden. Es ist ortsfest an dem Oberwerkzeug 7 gelagert oder Teil desselben. An dem Schneidmesser 11 ist eine Schneidkante 12 ausgebildet, die die Form der Schnittkontur 8 festlegt und dieser entspricht. Die Schneidkante 12 wird von zwei Flächen 13, 14 begrenzt, die vorzugsweise in einem Winkel von etwas kleiner 90°, d.h. einem spitzen Winkel, zueinander orientiert sind.

Die Werkstückklemmeinrichtung 10 wird durch ein Werkstücklager 15 mit dem Werkstück 3 zugewandter Auflagefläche 16 sowie eine Blechhalteeinrichtung 17 gebildet. Das Werkstücklager 15 ist mit dem Unterwerkzeug 5 verbunden oder Teil desselben. Es endet an der Schnittkontur mit, einer entsprechenden Kante 18, bei der die angrenzenden Flächen einen rechten oder etwas spitzen Winkel miteinander bilden.

Die Blechhalteeinrichtung 17 ist an dem Oberwerkzeug 7 gelagert und mittels eines z.B. hydraulischen Vorspanneinrichtung gegen das Werkstück 3 vorgespannt. Beim Niedergehen des Oberwerkzeugs 3 setzt die Biechhalteeinrichtung 17 auf dem Werkstück 3 auf bevor das Schneidmesser 11 das Werkstück 3 berührt. Sodann presst die Blechhalteeinrichtung 17 das Werkstück 3 fest gegen die Auflagefläche 16.

Zu der Schneideinrichtung 9 gehört weiter eine Vorbiegeeinrichtung 19, die dazu dient und eingerichtet ist, das Werkstück 3 vor und gegebenenfalls während der Durchführung des Schneidvorgangs mit einer Biegebeanspruchung zu beaufschlagen. Die Vorbiegeeinrichtung 19 wird im einfachsten, in Figur 3 bis 6 veranschaulichten, Fall durch einen Vorsprung 20 gebildet, der an dem Schneidmesser 11 oder Schneidstempel in Richtung auf das Werkstück 3 vorspringend ausgebildet ist. Er überragt die Fläche 14 und auch die Schneidkante 12 insoweit in Richtung auf das Werkstück 3, dass er vor der Schneidkante 12 auf dem Werkstück 3 aufsetzt. Der Vorsprung 20 ist vorzugsweise eine Rippe, die in fest gelegtem Abstand a zu der Schneidkante 12 angeordnet ist. Vorzugsweise weist der Vorsprung 20 entlang seiner Längserstreckung überfall die gleiche Höhe h auf, die, wie in Figur 1 angedeutet, in Bezug auf die Schneidkante 12 bzw. eine Ebene gemessen wird, die parallel zu der Auflagefläche 16 angeordnet ist und die von der Oberseite des Werkstücks 3 festgelegt ist, auf der die Schneidkante 12 in Figur 3 ruht.

Das Verhältnis des Abstands a (l) zu der Höhe h (s) ist vorzugsweise das 6 -fache der Blechdicke

Der Vorsprung 20 muss nicht zwangsläufig als durchgehende Rippe ausgebildet, sein. Es ist auch möglich, eine Reihe von Einzelvorsprüngen vorzusehen. Auch können diese jeweils einzeln höhenverstellbar sein, um in Abhängigkeit vom konkreten Verlauf der Schnittkontur 8 geeignete Anpassungen vorzunehmen. Beispielsweise kann es zweckmäßig sein, die Höhe h in Bereichen abweichend festzulegen, in denen die Schnittkontur 8 engere Krümmungen durchläuft.

Das insoweit beschriebene Werkzeug arbeitet wie folgt:

Bei Durchführung eines Schneidvorgangs bewegt, sich das Oberwerkzeug 7 auf das Unterwerkzeug 5 zu. Es setzt dann die Blechhalteeinrichtung 17 auf dem Werkstück 3 auf und presst diesen mit großer Anpresskraft gegen die Auflagefläche 16. Zwischen der Blechhalteeinrichtung 17 und der Fläche 13 des Schneidmessers 11 verbleibt ein geringer Spalt, der vorzugsweise ungefähr dem Schneidspalt entspricht, wie er zwischen der Kante 18 und der Fläche 13 des Schneidmessers 11 festgelegt ist.

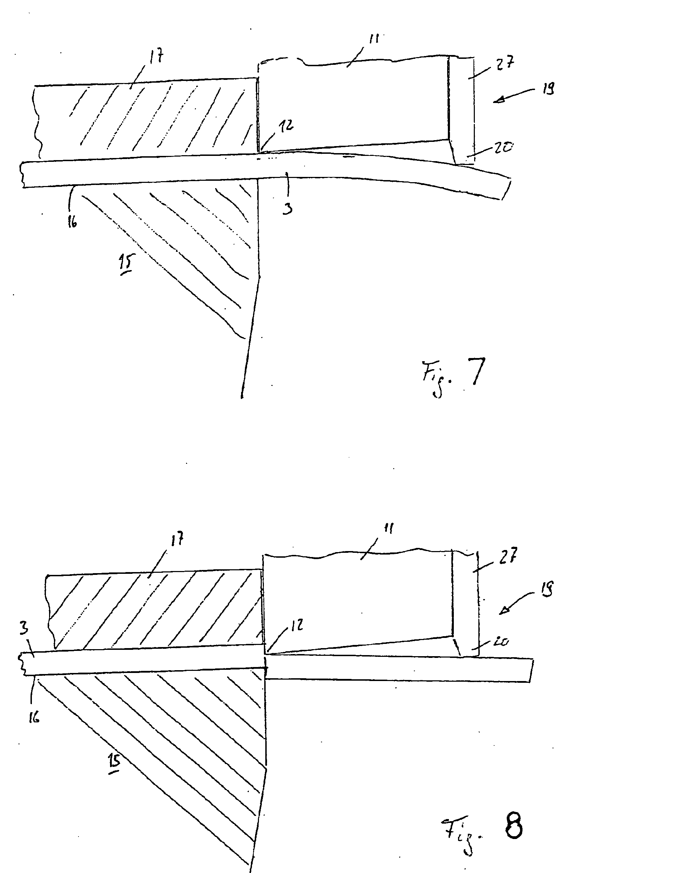

Während die Blechhalteeinrichtung 17 auf dem Werkstück 3 aufsitzt bewegt sich das Oberwerkzeug 7 weiter nach unten. Es trifft dann der Vorsprung 20 auf dem Werkstück 3 auf und biegt dieses in seiner weiteren Abwärtsbewegung nach unten. Durch diese Biegebeanspruchung entsteht eine so hohe Biegespannung, insbesondere unmittelbar im Anschluss an die Blechhalteeinrichtung 17, d.h. im Bereich der zu erzeugenden Schnittkontur. Mit weiterer Abwärtsbewegung des Schneidmessers 11 nimmt, die Zugspannung zu, wobei sie jedoch die Fließgrenze des Materials nicht erreicht. Es trifft dann, wie Figur. 7 veranschaulicht, die Schneidkante 12 auf der Oberseite des Werkstücks 3 auf und beginnt, dieses mit einer Schubspannung zu beaufschlagen. Diese ergibt zusammen mit der bereits eingeleiteten Zugspannung eine Vergleichsspannung, die zur Materialtrennung führt. Dies veranschaulicht Figur 8. Mit beginnendem Trennvorgang entspannt sich der bislang gebogene Blechabschnitt wieder.

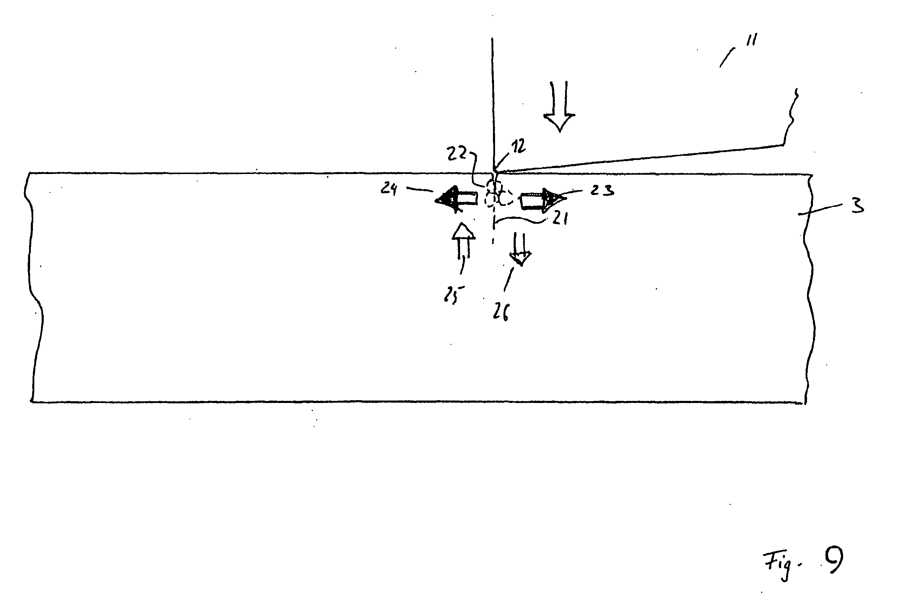

Der insoweit beschriebene Schneidvorgang geht mit geringen Kräften an der Schneidkante 12 und mit geringem Werkzeugverschleiß einher. Es werden hohe Trennflächen- oder Schnittflächenqualitäten erreicht. Die sich ausbildende Trennebene 21 kann, wie in Figur 9 veranschaulicht ist, einzelne Körner oder Kristallite 22 des Werkstücks 3 durchtrennen. Dies wird durch die Beaufschlagung mit den sehr hohen, in Figur 9 durch Pfeile 23, 24 veranschaulichte, Zugspannungen möglich, die vorzugsweise größer sind als die eingeleiteten Schubspannungen (Pfeile 25, 26). Dies führt zu sehr glatten Schnitt- oder Bruchflächen.

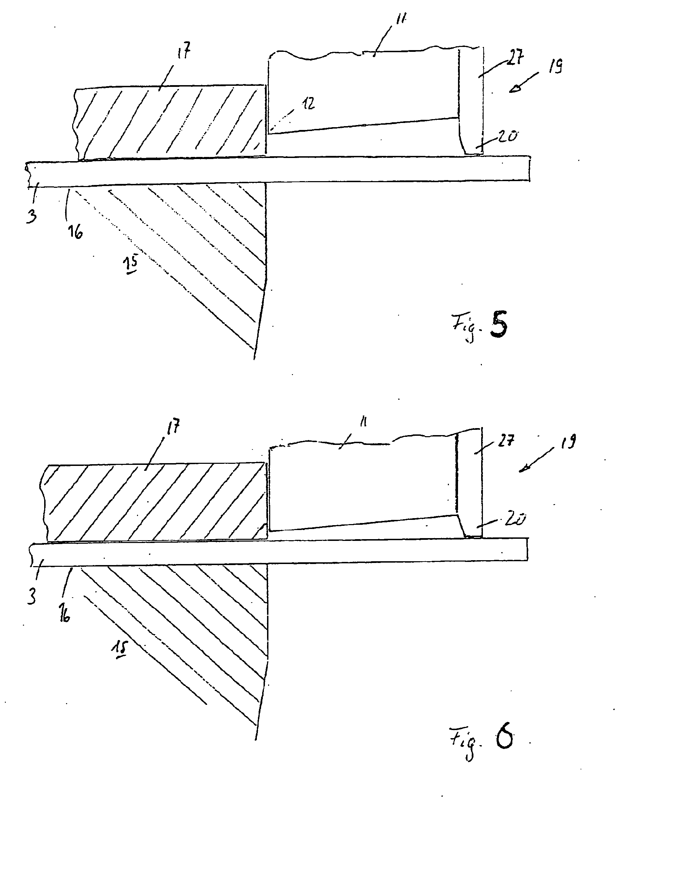

Die Figuren 5 bis 8 veranschaulichen eine verfeinerte Ausführungsform, bei der das Schneidmesser 11 und die Vorbiegeeinrichtung 19 voneinander unabhängig oder getrennt ausgebildet sind. Die Vorbiegeeinrichtung 19 wird jeweils durch ein gesondertes Vorspannelement 27 gebildet, das in Nachbarschaft zu dem Schneidmesser 11 und im Abstand zu dessen Schneidkante 12 angeordnet ist. Das Vorbiegeelement 27 kann beispielsweise mit einer Vorspanneinrichtung mit dem Oberwerkzeug 7 verbunden sein. Die Vorspanneinrichtung kann beispielsweise ein unter einem vorgegebenen Druck stehender Hydraulikzylinder sein, der das Vorbiegeelement 27 mit einer definierten Kraft beaufschlagt, um das Werkstück 3 definiert zu biegen, d.h. vorzuspannen. Der Arbeitsablauf ist dann folgendermaßen:

Nach Aufsetzen der Blechhalteeinrichtung 17 und Spannen derselben gegen das. Werkstück 3 setzt das Vorbiegeelement 27 auf dem Werkstück 3 auf, wie in Figur 5 veranschaulicht ist. Während sich das Oberwerkzeug 7 und mit diesem das Schneidmesser 11 weiter auf das Werkstück 3 zu bewegt, baut die dem Vorbiegeelement 27 zugeordnete Vorspanneinrichtung eine Kraft auf. Diese. Phase ist in Figur 6 veranschaulicht, in der das Werkstück 3 noch nicht, wesentlich gebogen ist.

Spätestens wenn die Schneidkante 12, wie in Figur 7 veranschaulicht, auf dem Werkstück 3 aufsetzt, bringt das Vorbiegeelement 27 auch die nötige Vorspannkraft auf, um das Werkstück 3 bis kurz vor die Fließgrenze des Materials vorzubiegen bzw. vorzuspannen. Das Abscheren erfolgt dann, gemäß Figur 8, mit lediglich noch geringer Scherkraft, indem das Schneidmesser 11 in das Material des Werkstücks 3 an der Schnittlinie 3 eindringt und Schubspannung einleitet.

Wie bei dem vorstehend beschriebenen Ausführungsbeispiel wird auch hier der überwiegende Teil der zum Trennen des Materials erforderlichen Spannung durch die Vorbiegeeinrichtung 19 aufgebracht, während der eher kleinere Teil der Materialspannung durch das Schneidmesser 11 eingeleitet wird. Somit ist der Beitrag der Vorbiegeeinrichtung 19 zur

Vergleichsspannung σv größer als der Beitrag des Schneidmessers 11. Es gilt:

$$\sigma v = \sqrt{(\sigma^2 + 3\tau^2)}$$

wobei σv die Vergleichsspannung,

σ die Zugspannung,
τ die Schubspannung symbolisiert und wobei
$3\tau^2 < \sigma^2$.

In Abwandlung der im Zusammenhang mit den Figuren 5 bis 8 beschriebenen Ausführungsform ist es auch möglich, die von dem Vorbiegeelement 27 aufgebrachte Kraft während des Schneidvorgangs zu modulieren, d.h. nach vorgegebener Zeitabhängigkeit oder vorgegebener Abhängigkeit von der Position des Schneidmessers 11 kontrolliert zu beeinflussen. Dadurch kann die Schnittqualität weiter beeinflusst werden. Beispielsweise ist es möglich, die Vorbiegekraft, nach Einleitung des Trennvorgangs wesentlich zu reduzieren. Auch ist es möglich, gezielt .an- und abschwellende Kräfte einzusetzen oder die Vorbiegekraft entlang der gewünschten Schnittkontur 8 zu variieren. Beispielsweise kann die Vorbiegekraft in konkaven Schnittlinienbereichen größer als in konvexen Schnittlinienbereichen festgelegt werden oder es können sonstige Verlaufsprofile angewandt werden.

Ein erfindungsgemäßes Verfahren zum Schneiden von hochfesten, insbesondere nicht duktilen Blechen, insbesondere Stahlblechen, stellt eine Kombination aus einem Brech- und einem Schneidverfahren dar. Bei diesem Verfahren wird das zu trennende Material bis kurz unter die Fließgrenze vorgespannt und dann einem Schneidvorgang unterzogen. Es ergibt sich eine wesentlich erhöhte Standzeit, des Werkzeugs in Verbindung mit zugleich wesentlich verbesserter Flächengüte der Trennfläche im Vergleich zu reinen Brech- oder reinen Schneidverfahren.

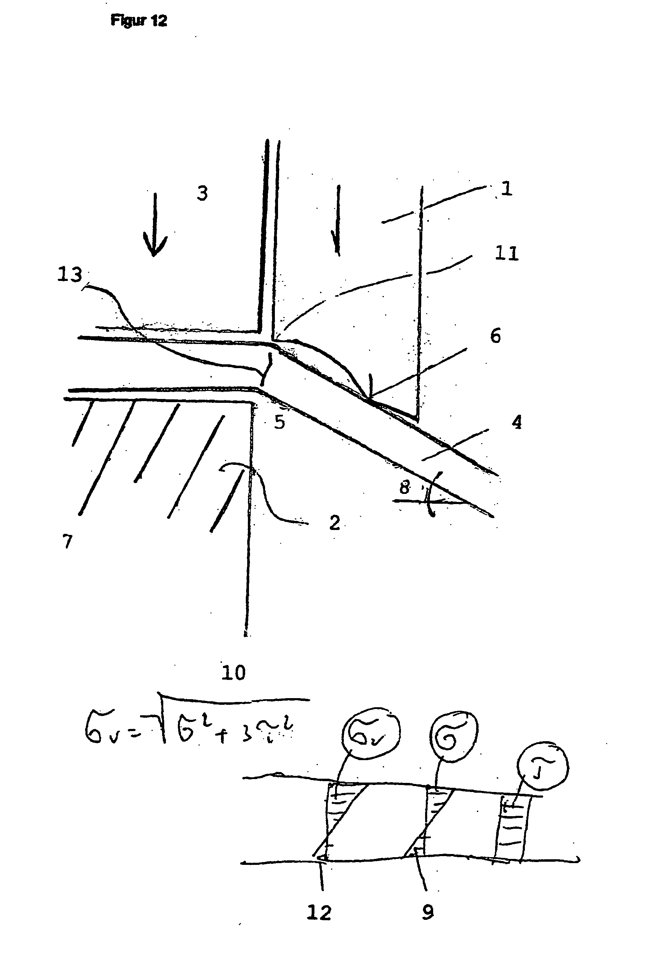

Beschrieben wird in Figur 12 eine Vorrichtung zum Scheiden von hochfesten Blechen, Biegschneiden Stand der Technik: Bleche werden in Schneidvorrichtungen und Pressen mit Schneidstempel ins Matrize geschnitten. Bei hochfesten, insbesondere, martensitisch gehärtete Bloch bringen bei herkömmlicher Schneidengeometrie extremen Verschleiß an der Schnittkante. Die Nachteile der vorhandenen Technik werden dadurch gelöst, dass der Schneidstempel mit einer Schräge versehen wird, die Aufgabe hat, bevor die Schneidkante zum Scheren aufsetzt, das Blech bis kurz vor der Bruchgrenze auf Zugspannung, das Blech vorzubiegen und dann durch einen kleinen Tipp nur noch zu Scheren. Die Schneidengeometrie durch den Tipp hat die Aufgabe das Blech an der genau vorgesehenen Linie genau zu schneiden. Der eigentliche Scherbruch wird Quasi durch einen vorhergehenden Biegevorspannung unterstützt. Aus der Gestaltänderungshypothese ist die Vergleichsspannung die Wurzel aus der Biegespannung im Quadrat, addiert mit 3 mal der Schubspannung im Quadrat. Dies bedeutet, dass die Scherspannung durch das Biegescheren extrem verbessert wird. Versuche haben gezeigt, dass durch dieses System auch komplizierte Schnitte mit haltbaren Messern zu bewältigen sind. Figur 12 zeigt die Schneidengeometrie zum kontrollierten Biegeschneiden.

1. Schneidstempel, Schneidmesser,
2. Schneidmatrize
3. Niederhalter
4. Blech
5. Biegekante
6. Schnitt
7. Matrize
8. Biegewinkel
9. Biegespannung
10. formel der Gestaltänderungshypothese
11. Tipp-Bruch
12. Restspannung mit Tipp-Rest
13. Schubspannung, Restbruch

Vorrichtung oder Verfahren zum Scheiden von hochfesten fast nichtduktilen Blechen mit kleinerer Schnittkrafterfordernis dadurch gekennzeichnet dass das Blech vor dem Scheren mit dem Anbringen einer Biegekante eine Vorbiegespannung aufgebracht wird, wobei der Schneidstempel oder das Schneidmesser mit einer Schräge zur Vorbiegung versehen wird, wobei die Vorbiegung durch eine separate Vorbiegeschiene aufgebracht wird, wobei der Dipp etwas negativ geschliffen wird, wobei die Auftreffkante 6 definiert im Abstand gehalten wird, wobei die Auftreffkante zur Schnittkante hohl gehalten wird.

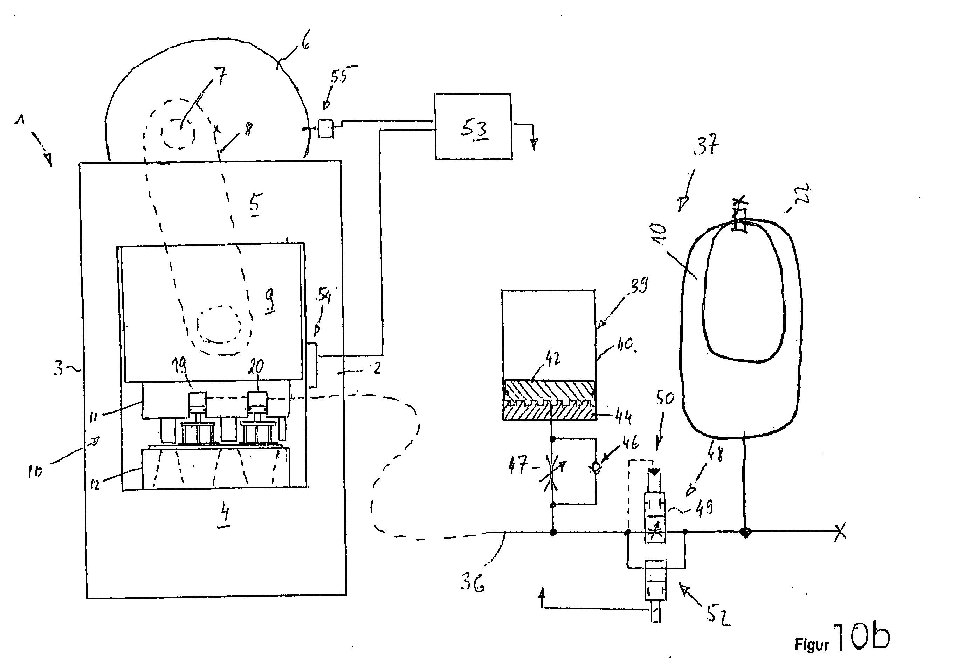

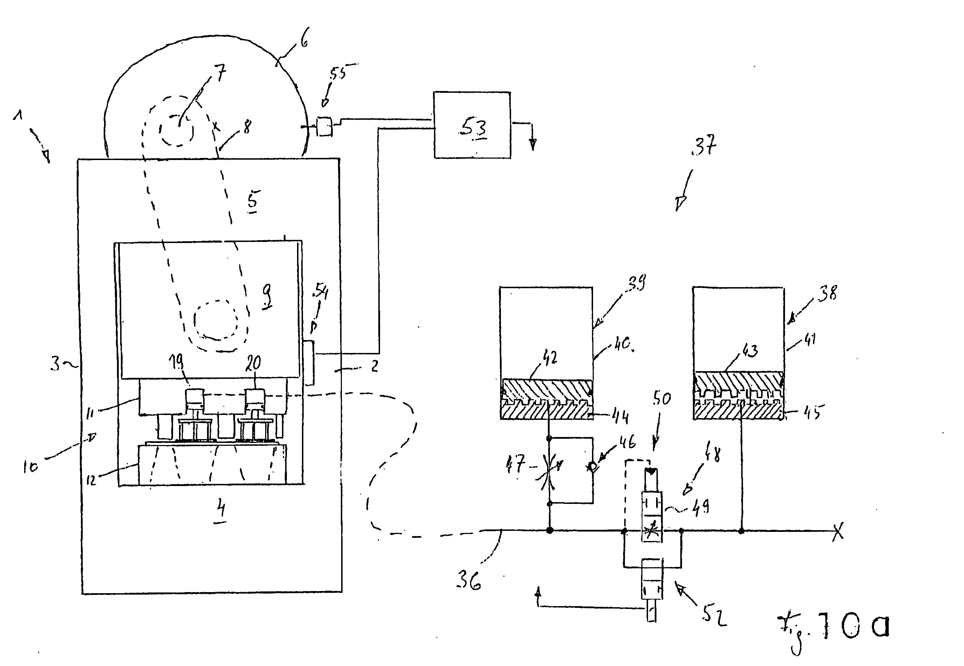

In Figur 10 ist in aufs äußerste schematisierter Darstellung eine Presse 1 veranschaulicht, die ein Pressengestell mit Pressenständern 2, 3, einem Pressentisch 4 und einem Kopfstück 5 aufweist. An dem Kopfstück 5 ist ein Antrieb 6, beispielsweise in Form eines Elektromotors gehalten, der über einen schematisch veranschaulichten und gestrichelt dargestellten Exzenter 7 und ein ebenfalls gestrichelt dargestelltes Pleuel 8 einen Stößel 9 hin und her gehend antreibt. Zwischen dem Stößel 9 und dem Pressentisch 4 ist ein Werkzeug L0 mit einem Oberwerkzeug 11 und einem Unterwerkzeug 12 vorgesehen. Das Unterwerkzeug 12 ist als Stanzwerkzeug ausgebildet. An dem Oberwerkzeug 11 sind Stempel 13,. 14, 15 gehalten, die wie die übrigen Details des Werkzeugs 10 insbesondere aus Figur 2 ersichtlich sind. Das Werkzeug 10 dient zum Stanzen eines Werkstücks 16, das in Figur 2 als ebenes Werkstück veranschaulicht ist. Selbstverständlich können jedoch auch nicht ebene Werkstücke in entsprechender Weise einem Stanzvorgang unterzogen werden. In diesem Fall weist das Unterwerkzeug 12 dann eine dem nicht ebenen Werkstück entsprechende Kontur auf.

Zu dem Oberwerkzeug 11 gehört, eine Blechhalteeinrichtungsplatte 17, die über nicht weiter veranschaulichte Mittel an einem Grundkörper.18 des Oberwerkzeugs 11 gehalten ist. Der mit dem Stößel 9 verbundene Grundkörper 18 trägt die Stempel 13 bis 15, die dadurch starr mit dem Stößel 9 verbunden sind. Außerdem enthält der Grundkörper 18 einen oder mehrere Hydraulikzylinder 19, 20, die zusammen mit der Blechhalteeinrichtungsplatte 17 eine Blechhalteeinrichtung 21 bilden. Zu der Blechhalteeinrichtung 21 gehören Außerdem Druckstifte 22 bis 27, die ungefähr oder genau parallel zu den Stempeln 13 bis 15 angeordnet sind und sich mit ihrem unteren stirnseitigen Ende auf der Blechalterplatte 17 abstützen. Die im Übrigen im Wesentlichen zylindrischen Stifte stützen sich mit ihrem oberen stirnseitigen Ende an Schwebeplatten 28, 20 ab, die somit oben auf den Druckstiften 22 bis 27 liegen: Zu den Hydraulikzylindern 19, 20 gehören Kolben 30, 31, die in den Hydraulikzylindern 19, 20 entsprechende mit Hydraulikfluid gefüllte Arbeitsräume 32, 33 abgrenzen und abgedichtet sowie verschiebbar in diesen gelagert sind. Kolbenstangen 34, 35 der Kolben 30, 31:drücken von oben her auf die Schwebeplatten 28, 29 und somit die Blechhalteeinrichtungsplatte 17 gegen das Werkstück 16.

Die Hydraulikzylinder 19, 20 sind über eine in Figur 11 nicht und in Figur 10 a,b lediglich schematisch dargestellte Fluidleitung 36 an ein Hydrauliksystem 37 angeschlossen, das zur Erzeugung einer Blechhalteeinrichtungskraft und zugleich zur Übernahme der von dem Stößel 9 ausgeübten Kraft bei und nach Durchbruch des Werkstücks 16 dient. Dieser Kraftübergang soll möglichst stufenlos, d.h. ohne sprunghafte Kraftänderung erfolgen.

Zu dem Hydrauliksystem 37 gehören ein erster Druckspeicher 38 und ein zweiter Druckspeicher 39, die im Ausführungsbeispiel beide als Druckspeicherzylinder 40, 41. mit, darin abgedichtet, verschiebbar gelagerten Kolben 42, 43 auegebildet sind. Beide Kolben 42, 43 teilen in den Druckspeicherzylindern 40, 41 jeweils zwei Arbeitskammern ab, deren obere, jeweils mit einem Gaspolster gefüllt ist. Der Druckspeicher 38 steht beispielsweise unter einem Druck von ungefähr 200 bar während der Druckspeicher 39 z.B. unter einem Druck von 400 bar steht.

Die Kolben 42, 43 weisen an ihrer unteren, den jeweiligen Abschlussstücken 44, 45 zugewandten Seite vorzugsweise eine Profilierung auf, die komplementär zu einer Profilierung des jeweiligen Abschlussstücks 44, 45 ausgebildet ist. Die Profilierung wird durch gerade oder gebogene, z.B. ringförmig konzentrische Leisten oder Stege gebildet, wobei die Leisten oder Stege jedes Kolbens 42, 43 in entsprechend geformte Ausnehmungen jedes Abschlussstücks 44, 45 passen. Die Profilierungen dienen als Endlagendämpfung, so dass die Kolben 42, 43, wenn sie gegen die Anschlussstücke 44, 45 laufen, sanft, abgebremst werden.

Beide Druckspeicher 38, 39 sind mit der Fluidleitung 36 verbunden Vorzugsweise ist, der Druckspeicher 39 über ein Rückschlagventil 46 und eine Drosseleinrichtung 47 an die Fluidleitung 36 angeschlossen. Das Rückschlagventil 46 ist dabei so orientiert, dass das Hydraulikfluid aus der Hydraulikleitung 36 ungehindert in den Druckspeicher 40 einströmen kann, während es auf seinem Rückweg durch die Drosseleinrichtung 47 gezwungen wird.

Der Druckspeicher 38 ist über eine Ventileinrichtung 48 mit der Fluidleitung 36 und somit den Hydraulikzylindern 19, 20 verbunden. Die Ventileinrichtung 48 enthält z.B. ein Wegeventil 19, das zwischen zwei Zuständen umschaltbar ist. In einem ersten Zustand gibt es den Fluidfluss in und aus dem Druckspeicher 38 unbeschränkt oder gedrosselt frei, während es in seinem anderen Zustand diesen Fluidfluss sperrt. Die Ventileinrichtung 48 kann mit einer Sensoreinrichtung 50 verbunden sein, die beispielsweise den Massenstrom {m}; in der Fluidleitung 36 überwacht und schließt, sobald dieser in den Druckspeicher 38 hinein gerichtete Hydraulikfluss einen Schwellwert $\{m_{tn}\}$ übersteigt und dann so lange geschlossen bleibt, bis der Druck in der Fluidleitung 36 unter einen Schwellwert abfällt.

Die Sensoreinrichtung 50 bildet somit zugleich eine Steuereinrichtung 51 zur Steuerung der Ventileinrichtung 48 in Abhängigkeit von der Geschwindigkeit der Relativbewegung zwischen den Kolben 28, 29 der Hydraulikzylinder 19, 20 und dem. Stößel 9.

Zu der Ventileinrichtung 48 kann außerdem bedarfsweise ein Bypassventil 52 gehören, das die Ventileinrichtung 48 überbrückt und somit einen alternativen Pfad von den Hydraulikzylindern 19, 20 zu dem Druckspeicher 38 schafft. Das Bypassventil 52 ist beispielsweise ein Auf/Zu-Ventil, das elektrisch pneumatisch oder anderweitig gesteuert sein kann. Vorzugsweise ist es dazu an eine Steuereinrichtung 53 angeschlossen, die vorzugsweise als Mikroprozessorsteuerung oder auch als anderweitige geeignete elektronische Steuerung ausgebildet sein kann. Neben anderen Eingangssignalen erhält die Steuereinrichtung 53 mindestens ein Positionssignal. Dieses kann beispielsweise von einem Geber 54 herrühren, der als Weggeber die Position des Stößels 9, insbesondere in der Nähe seines unteren Totpunkts erfasst. Zusätzlich oder alternativ kann ein Geber 55 vorgesehen sein, der die Winkelstellung der Exzenterwelle wenigstens in einem Drehwinkerbereich erfasst, bei dem der Stößel 9 in der Nähe seines unteren Totpunkts steht.

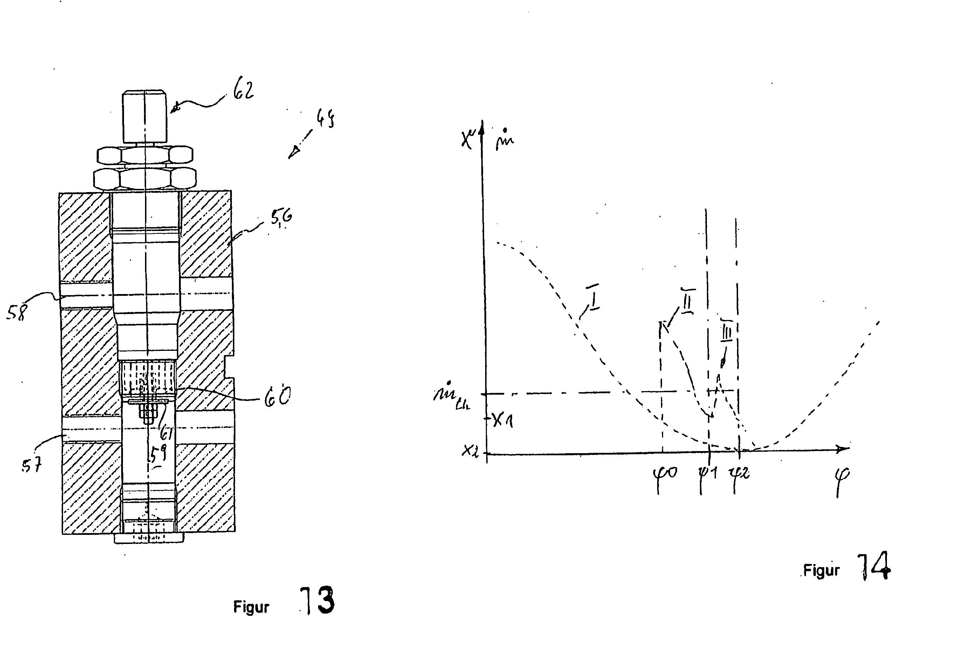

Figur13 veranschaulicht eine Ausführungsform der Ventileinrichtung 48, die wegen ihrer schnellen Reaktionszeit bevorzugt wird. Es weist einen Grundkörper 56 auf, der mit zumindest einem Eingang 57 und mit einem Ausgang 58 versehen ist. Zwischen beiden Ist ein Kanal 59 ausgebildet, der längs durch den Grundkörper 6 durchgeht, und zu dem die Kanäle des Eingangs 57 und des Ausgangs 58 quer gerichtet sind. Zwischen dem Eingang 57 und dem Ausgang 58 ist ein Ventilsitz 60 auegebildet, dem ein Ventilverschlussglied in Form einer Scheibe 61 zugeordnet, ist. Letztere sitzt auf einem Stift und ist durch eine Feder in Öffnungsrichtung von dem Ventilsitz 60 weg vorgespannt. Die Vorspannung kann bedarfsweise mittels einer von außen zugänglichen Handhabe, beispielsweise einer Einstellschraube 62 eingestellt werden.

Die insoweit beschriebene Presse 1 arbeitet in einer ersten einfachen Ausführungsform, die prinzipiell ohne die Steuereinrichtung 53 auskommt, wie folgt:

Zur Funktionsveranschaulichung wird ein einziger Stanzhub beschrieben. Zur Durchführung desselben wird zunächst, das Werkstück 16 auf das Unterwerkzeug 12 gelegt, wonach sich der Stößel 9 senkt. Die Blechhalteeinrichtungsplatte 17 ist dabei in ihrer untersten Position, in der sie mit, ihrer Unterseite zumindest etwas unterhalb der Stirnflächen der Stempel 13, 14, 15 steht. Bevor die Blechhalteeinrichtungsplatte 17 auf dem Werkstück 16 aufsetzt, sind die Kolben 30, 31 in den Hydraulikzylinder 19, 20 in Ruhe. Das Hydraulikfluid steht in dem Hydrauliksystem 37 unter einem Ruhedruck.

Sobald die Blechhalteeinrichtungsplatte 17 auf dem Werkstück 16 aufsetzt, drückt sie das Werkstück 16 an das Unterwerkzeug 12 an. Die Blechhalteeinrichtungsplatte 17 bleibt somit stehen während sich der Stößel 9 weiter in Richtung auf das Werkstück 16 zu bewegt. Ebenfalls stehen bleiben die Druckstifte 22 bis 27, die Schwebeplatten 28, 29 und die Kolben 30, 31. In Folge der weiteren Abwärtsbewegung des Stößels 9 wird somit das Volumen der Arbeitskammern 32, 33 vermindert und Hydraulikfluid über die Fluidleitung 36 und das offene Wegeventil, 49 der Ventileinrichtung 48 in den Druckspeicher 38 getrieben, der einen niedrigeren Ruhedruck hat als der Druckspeicher 39. Somit wird der Kolben 43 in Figur 1 gegen die Kraft des oberen Gaspolsters nach oben bewegt. Der bei diesem Vorgang auftretende Fluidstrom {m} liegt, unterhalb eines Schwellwerts, so dass die Sensoreinrichtung 50 nicht anspricht.

Sodann setzen die Stirnseiten der Stempel 13, 14, 15 auf dem Werkstück 16 auf. Das Werkstück 16 setzt dem Eindringen der Stempel 13, 14, 15 einen erheblichen Widerstand entgegen, so dass die Bewegung der Stempel 13, 14, 15 zunächst stoppt. Die Antriebsleistung der Antriebseinrichtung 6 wird nun kurzzeitig darauf verwendet, den Antriebsstrang und das Pressengestell einschließlich Pressentisch 4 und Unterwerkzeug 12 etwas elastisch zu deformieren, d.h. zu spannen. Damit wird zunehmend eine größer werdende Kraft aufgebaut, bis schließlich die Stempel 13, 14, 15 durch das Werkstück 16 stoßen. In dem Moment, des Durchbruchs kommt eine sehr schnelle Relativbewegung zwischen dem Grundkörper 18 und somit den Hydraulikzylindern 19, 20 und der Blechhalteeinrichtungsplatte 17 zustande. Dies führt zu einem kurzzeitigen, sehr starken Anstieg des Massenstroms {m} des Hydraulikfluids aus den Hydraulikzylindern 19, 20 in den Druckspeicher 38. Der Anstieg ist so steil, dass die Sensoreinrichtung 50 dies erkennt und das Wegeventil 49 schließt. Bei der Ausführungsform nach Figur 3 bedeutet dies, dass der von dem Eingang 57 zu dem Ausgang 58 fließende Fluidstrom die Scheibe d.h. das Ventilverschlussglied 61 mitnimmt und gegen die Kraft der Feder gegen den Ventilsitz 60 drückt. Das Wegeventil 49 schließt somit schlagartig, wobei der Schließzustand erhalten bleibt bis ein sinkender Systemdruck dem Ventilverschlussglied 61 gestattet, in seine Offenstellung. d.h. Ruheposition zurück zu kehren.

Ist nun das Wegeventil 49 geschlossen, kann kein weiteres Hydraulikfluid in den Druckspeicher 38 fließen. Es muss deshalb in den Druckspeicher 39 ausweichen, der unter erheblich höherem Druck steht. Somit erzeugen die Hydraulikzylinder 19, 20 nunmehr einen erheblichen Gegendruck, der sich einerseits auf der Blechhalteeinrichtungsplatte 17 abstützt und andererseits dem Stößel 9 entgegen wirkt. Somit kommutiert die bislang von den Stempeln 13, 14, 15 aufgenommene Kraft auf die Blechhaltereinrichtung 21, so dass sich die gespannte Presse nicht entspannen kann. Gegen die große Kraft der Blechhaltereinrichtung durchläuft der Stöße1 nun einen unteren Totpunkt, wobei die Blechhaltereinrichtung dann auf dem ersten Abschnitt, des Aufwärtshubs den Stößel 9 mit großer Kraft nach oben schiebt. In dieser Phase wird die in der Presse 1 gespeicherte elastische Energie an den Stößel 9 und somit an die Antriebseinrichtung 6 zurück gegeben.

Eine verfeinerte Ausführungsform nutzt zur Steuerung der Blechhaltereinrichtung oder einer alternativen Abstützeinrichtung, beispielsweise in Form von Hydraulikzylindern zwischen dem Stößel 9 und dem Pressentisch 4 oder dem Oberwerkzeug 11 und dem Unterwerkzeug 12, die Steuereinrichtung 53. Diese überwacht die Position X des Stößels 9 oder den Drehwinkel φ der Antriebseinrichtung 6, d.h. des Exzenters 7 Die Verhältnisse sind in Figur 4 veranschaulicht. Es wird dabei von einer Presse mit großer Hubzahl ausgegangen. Eine erste Kurve 1 veranschaulicht den Weg X. des Stößels 9 über dem Drehwinkel, φ der Exzenterwelle. ES wird von einem angenähert sinusförmigen Zusammenhang ausgegangen. Bei einem Pressenwinkel φ0 setzt die Blechhalteeinrichtungsplatte 17 auf dem

Werkstück auf. Die Kurve II veranschaulicht den Massenstrom des aus den Hydraulikzylindern 19, 20 verdrängten Hydraulikfluids. Wie ersichtlich, steigt dieser bei dem Aufsetzen der Blechhalteeinrichtunsplatte 17 auf das Werkstück 16 sprungartig auf einen relativ hohen Wert an. Bei der Annäherung des Stößels 9 gegen seinen unteren Totpunkt fällt der Massenstrom {m} immer weiter ab. Dies schon deshalb weil die Geschwindigkeit des Stößels 9 bei Annäherung an den unteren Totpunkt abnimmt. In Folge des Widerstands das das Material des Werkstücks 16 dem Stanzvorgang entgegensetzt, wird der Stößel zusätzlich abgebremst, weshalb der Massenstrom der Kurve II entsprechend schnell stark zurückgeht.

Bei einem Pressenwinkel φ1, der mit Sicherheit nach dem Aufsetzen der Blechhalteeinrichtungsplatte 17 auf dem Werkstück 16 und mit Sicherheit vor dem Durchbruch der Stempel 13, 14, 15 durch das Werkstück 16 liegt, sperrt die Steuereinrichtung 53 nun das Bypassventil 52, womit, die Sensoreinrichtung 50 aktiviert wird. An Stelle des Kurbel- oder Pressenwinkels φ1 kann als Kriterium zur Freigabe der Sensoreinrichtung 50 und der Ventileinrichtung 48 auch herangezogen werden, dass der Stößel 9 den Punkt x1 durchläuft. Allerdings wird die Überwachung des Pressenwinkels bevorzugt, weil dieser eine bessere Auflösung bietet.

Tritt nun nach Aktivierung bzw. Freigabe der Sensoreinrichtung 50, nach Durchlaufen von φ1, der Durchbruch des Werkstücks 16 auf, steigt, der Fluidfluss {m} über einen Schwellwert {m} an. Dies ist in Figur 4 durch die Spitze III in der Kurve II veranschaulicht. Das Überschreiten des Schwellwerts für den Fluidfluss wird erfasst und führt zum Schließen der Ventileinrichtung 48, wie oben beschrieben, und somit zur Abstützung des Stößels 9 auf der Blechhallereinrichtung 21.

Wie aus Figur 14 ersichtlich, kann durch Festlegung des Aktivierungsfensters zwischen den Pressenwinkeln φ1 und φ2 erreicht werden, dass Flussspitzen detektiert, werden, die geringer sind als der Fluss unmittelbar nach Aufsetzen der Blechhalteeinrichtungsplatte 17 auf dem Werkstück 16. Dies spielt bei sehr schnellen Pressen (hohen Hubzahlen), bei großen Stanzhüben und insbesondere auch bei sehr steifen Pressengestellen eine Rolle, bei denen zwar eine sehr große Spannkraft aber nur ein geringer Spannhub im gesamten Pressengestell auttritt. Durch die Beschränkung der Überwachung des Fluidflusses auf ein Winkelfenster φ1, φ2 des Pressenantriebs innerhalb dessen der Stanzdurchbruch zu erwarten ist, kann die Ansprechschwelle {$m_{th}$} für die Ventileinrichtung 48 sehr niedrig gelegt werden, so dass der sonst zu beobachtende Stanzschlag auf ein fast nicht mehr wahrnehmbares Minimum zu beschränken ist.

An Stelle der Sensoreinrichtung 50, die den Fluidfluss aus den Hydraulikzylindern 19, 20 überwacht, können auch andere Sensoreinrichtungen Anwendung finden. Ergänzend ist es außerdem möglich, die Pressenwinkel φ1, φ2 variabel festzulegen. Beispielsweise können sie mit einer geeigneten Eingabeeinrichtung eingegeben werden. Es ist auch möglich, diese Pressenwinkel φ1, φ2 dynamisch anzupassen. Dies kann beispielsweise geschehen, indem φ1 in einen vorgegebenen oder eingebbaren Winkelabstand vor dem Stanz-

durchbruch und φ2 in einem festen oder einstellbaren Winkelabstand nach dem Stanzdurchbruch eingestellt wird. Als Pressenwinkel des

Stanzdurchbruchs wird dann jeweils der Pressenwinkel aus dem vorigen Stanzhub oder ein Durchschnittswert aus vorigen Stanzhüben herangezogen. Auch ist es möglich, in dem Pressengestell, dem Pressentisch oder anderen Teilen der Presse, Kraftsensoren unterzubringen, die auf eine Deformation des betreffenden Pressenelements oder direkt auf die in der Presse wirkende Kraft, ansprechen. Solches können beispielsweise Kraftsensoren in dem Werkzeug 10 sein Die von diesen Sensoren abgegebenen Signale können an die Steuereinrichtung 53 geführt werden und dazu dienen, die Pressenwinkel φ1, φ2 festzulegen Wird beispielsweise die auf die Stempel 13, 14, 15 ausgeübte Kraft erfasst, kann die Sensoreinrichtung 50 zu einem Zeitpunkt, d.h. dann freigegeben werden, wenn an den Stempeln 13, 14, 15 ein erheblicher Kraftanstieg zu verzeichnen ist. Zu diesem Zeitpunkt ist keine Fehlauslösung der Ventileinrichtung 48 mehr zu befürchten, weil die Relativbewegung zwischen der Blechhalteeinrichtungsplatte 17 und den Stempeln 13, 14, 15 nahezu Null beträgt.

Das erfindungsgemäße System gestattet eine wesentliche Erhöhung der Niederhalterkraft, insbesondere während der Durchführung des Stanzvorgangs, d.h. während die Stempel 13, 14, 15 durch das Material des Werkstücks dringen. Die eigentliche Schnittkraft kann dadurch auf bis ein Sechstel der theoretischen Schubkraft gesenkt werden. Die Blechhalteeinrichtung 21 bewirkt eine besonders feste Einspannung des Werkstücks 16 und bewirkt somit eine Verbesserung des Schnitts wie auch eine Schnittschlagdämpfung. Die Presse 1 wird so vorgespannt, dass Spiele ausgeglichen oder kompensiert werden. Dies führt gegenüber klassischen Schnittschlagdämpfungssystemen zur Verminderung der Gesamtpresskraft des Systems. Dies bedeutet aber auch, dass ältere Pressen auch weiterhin sogar für schwierige Trennoperationen eingesetzt werden können. Die auf die Blechhalteeinrichtungsplatte ausgeübte Kraft wird vorzugsweise etwa auf 40 % der Presskraft ausgelegt. Das Trennverfahren kann durch den Einsatz eines schnellen Auswerte- und Steuergeräts, wie beispielsweise der Steuereinrichtung 53, überwacht, ausgewertet und gesteuert werden. Das System kann weitgehend autark, d.h. von der Presse 1 unabhängig ausgebildet und eingesetzt werden Beispielsweise kann es Teil des Werkzeugs sein, und somit prinzipiell bei verschiedenen Pressen eingesetzt werden. Bei Änderung der Pressendaten können pressenspezifische Parameter über Programm oder anlagenspezifische Flashkarten geändert werden.

Die Drücke in den Hydraulikzylindern 19, 20 können encoder- oder wegeabhangig permanent überwacht werden. Die sich ergebenden Hüllkurven gestatten eine permanente Prozessüberwachung. Die Ansteuerung des Bypassventils 52 erfolgt kurbelwinkel- oder wegeabhängig über das gleiche System. Die Prozessdaten und Störungen können über Datenspeichersysteme gespeichert und bei Schäden rückverfolgt, werden. Außerdern können Systeme zur Erfassung von Überlastfällen vorgesehen werden.

Zur Erhöhung der Schnittqualität, insbesondere beim Stanzen hochfester austenitischer Werkstoffe oder auch beim Stanzen dicker Bleche, wird eine Blechhalteeinrichtung 21 vorgesehen, die das betreffende Werkstück 16 während des Stanzvorgangs fest einspannt. Die Spannkraft wird auf bis zu 40 % oder mehr Prozent der Stößelkraft erhöht. Insbesondere kann die von der Blechhalteeinrichtung auegeübte Kraft während des Werkstückdurchbruchs nochmals erhöht werden. Einerseits verbessert sich dadurch die Schnittqualität während sich andererseits eine effiziente Schnittschlagdämpfung an der Presse ergibt. Die Vorrichtung dient im Besonderen zur Verhinderung des Schnittschlages beim Durchbruch durch den Werkstoff.

Beim Schneiden von Blechen federt die Presse auf. Dies bedeutet, dass bei harten Blechen durch freiwerden der Schnittenergie die gesamte Auffederung in Schwingungsenergie übergeführt wird. Dies führt besonders bei harten Blechen, bzw. bei Blechen höherer Festigkeit, wie sie zukünftig besonders im Fahrzeugbau Verwendung finden, zur frühzeitigen Zerstörung der Bauteile in der Anlage. Der verspannte Rahmen und die damit verbundenen Bauteile wie: Exzenterwelle, Schwungradlagerung, Pleuel, Stößel, Tisch, Werkzeuge, Führungen, Zuganker, Körper, Schneidbacken, Matrizen werden durch das schnelle Entspannen extrem gefährdet.

Stand der Technik: Durch Schnittschlagzylinder wird nach dem Aufsetzen, beziehungsweise beim Durchbrechen Öl über Drossein oder Druckbegrenzungsventile abgespritzt. Die dabei frei werdende Energie wird voll in Warme umgesetzt. Dies hat den Nachteil der Energieverschwendung. Zusätzlich wird noch ein Niederhalter benötigt, der das Blech derartig gegen die Matrize spannt, dass es beim Schneiden nicht in Richtung der Schneidbacken abwinkelt. Dies führt zu einer zusätzlichen Presskrafterhöhung.

Vorteil der neuen Erfindung ist, dass der Niederhalter gleichzeitig als Schnittschlagabsorber wirkt. Die Auffederungsenergie wird im Hochdruckspeicher nur zwischengespeichert. Die Niederhalterzylinder dienen gleichzeitig zur Presskraftkonstanthaltung. Die Auffederungsenergie wird so gesteuert, dass sie nicht zum Ausschwingen der Presse führt. Die Auffederungs- und Entlastungskennlinie wird von der einer Schnittpresse, zu der einer Prägepresse manipuliert. Dies hat den Vorteil, dass die Auffederungsenergie bei mechanischen Pressen zurück ins Schwungrad eingespeist werden kann. Bei harten Blechen wird ca. 60 % der Schnittkraft als Niederhaltekraft benötigt. Bei diesem Schneidverfahren kann auf ca. 60 % der Nebenkräfte verzichtet werden. Die konventionelle Schnittschlagdämpfung braucht ca. 60 % der Presskraft als Gegenkraft. 50 % der Schnittkraft als Niederhaltekraft. Ist der Schneidstempel durch das Werkstück durchgebrochen, wirkt der Hochdruckspeicher mit der Stickstoffvorspannung entgegen. Dies bedeutet, dass die Presskraftkonstanthaltung erst der Presskraft entgegen wirkt, wenn das Werkstück bereits durchgebrochen ist. Dies wirkt nicht presskrafterhöhend. Geht man davon aus, dass durch die hochfesten und ultrahochfesten Bleche Festigkeit ca. 1200-1900 N/mm$^2$, zukünftig die Presskraft um das 4-5 -fache ansteigt, wird es notwendig sein, mit der Kraft zu geizen.

Beschreibung der Erfindung: Figur 15

Eine Presse mit Schwungrad (18) wird durch einen oder mehrere Motore (19) angetrieben. Über Kupplung und Exzentertrieb wird über ein oder mehrere Pleuels(13) der Stößel auf dem Tisch (11) nahezu parallel zu bewegt. Am Stößel (2) befindet sich vorzugsweise das Schneidwerkzeug (4) mit Niederhalter. Der Niederhalter (3) dient dazu, dass beim Schneidvorgang das Blech (6) nicht auffedert. Der auf den Niederhalter (3) wirkende Zylinderkolben hält das Blech (6) fest. Der Niederhalte/Kolben wird durch den Niederdruckspeicher (10) vorgespannt, bzw. übt das Öl über die Stickstoffkomprimierung über das Öl auf den Niederhalter eine vorab eingestellte Niederhalterkraft aus. Die Einstellung erfolgt durch den Stickstoffladedruck am Speicher (10). Dieser kann auch durch Federkraft/Kolbeneinheit vorgespannt werden. Bricht nun das Blech durch, schließt das Strömungsventil (16). Dieses Ventil (30) ist vorzugsweise mit einer massearmen Schlagplatte (31) ausgerüstet. Das Durchbrechen wird zur Presskraftkonstanthaltung umgesteuert. Der kontrollierte Bruch verhindert das Entspannen des Körpers und der damit verbundenen Elemente, wie Tischdurchfederung (11), Stößeldurchfederung (2), Pleueleinfederung (13). Nach dem Durchfahren des unteren Totpunktes wird die komprimierte Energie des Hochdruckspeichers (9) über den Niederhaltezylinder in das Schwungrad rückgespeist. Das Jetconventil (16) dient als Schnellschaltventil mit Durchflussbegrenzung. Übersteigt die Zugspannung die Fließgrenze, kann es nachteilig zu Mikrorissen im Material kommen. Vorsichtigerweise geht man nicht an die Bruchgrenze, sondern an die Fließgrenze.

Vorrichtung zum schnittschlagarmen Schneiden von Werkstücken, wobei der oder die Niederhaltezylinder gleichzeitig als Gegenhalter wirkt, wobei die Auffederungsenergie aus den Speichern in den Antrieb zurückgespeist wird, wobei das Jetconventil aktiv voraktiviert wird. Die Schlagplatte im Jetconventil besteht aus einem leichten, hochfesten Werkstoff. Die Niederhaltezylinder werden zur Parallelhaltung- genutzt. In Figur 17 wirken die Niederhalter 30, die auch in Figur 11 zu sehen sind, auch als Auswerfer mittels der Ölüberlaufkanäle 300. Der Niederdruckspeicher wird zur Ausregelung der außermittigen Presskraft verwendet. Die Rückspeisung wird mit Winkelbeschleunigungssensor im Schwungrad überwacht.

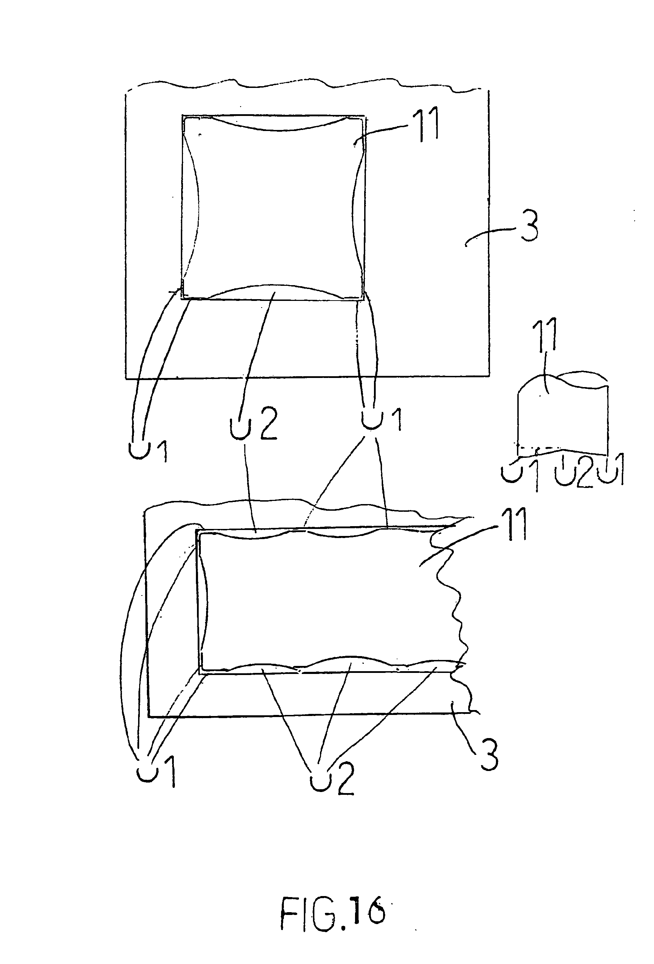

In Figur 16 wird ein Stempel 11 schematisiert dargestellt, der einen so genannten variablen Schnittspalt (u1..u2) zwischen Stempel 11 und Matrize 3 aufweist. Der Schnittspalt variiert zwischen u1 und u2 zwischen Werten von 2% bis 10% der Blechdicke, vorzugsweise aber von 2% bis 6%. Bei u1 beträgt der Schnittspalt etwa 2% der zu schneidenden Blechdicke, bei u2 - an der breitesten Stelle - beträgt der Schnittspalt etwa 6% der zu schneidenden Blechdicke. Wie bereits im Handbuch der Umformtechnik H.d.U., Springer Verlag, 1996 auf Seite 281 erwähnt , "verringert ein größerer Schneidspalt im allgemeinen den erforderlichen Kraft- und Arbeitsbedarf". Die Press- bzw. Schnittkraft ist folglich auch vom Schnittspalt abhängig. Auf die in Figur 16 dargestellte Weise, mittels Einsatz des variablen Schnittspaltes, lässt sich die Press- bzw. Schnittkraft in den eingesetzten Schnittwerkzeugen bzw. -pressen in etwa halbieren. Diese variable Schnittspalttechnik lässt sich für beliebige Geometrien verwenden, indem man z.B. wie in der unteren Darstellung in Figur 16 sehen kann, die u1..u2 Abschnitte segmentartig am Umfang des Stempels 11 anordnet. Beim Schneiden mittels des variablen Schnittspaltes wird das zu schneidende Blech zuerst im Bereich der u1 - Zonen aufgeschnitten, wobei sich dann ausbildende Risse in Richtung der u2 - Zonen ausbreiten, was zu einem dann - geringfügig zeitverzögert - vollständigen Schnitt führt. Laut H.d.U, Seite 275 ist "eine Verringerung der erforderlichen Schneidkraft möglich, wenn an Stelle eines Stempels mit ebener Arbeitsfläche ein schräggeschliffener, scherend schneidender Stempel verwendet wird." Auf Seite 276 wird von einer Reduzierung der Schneidkraft, "um mindestens 30% gegenüber Stempeln(Matrizen) mit planer Fläche" gesprochen. In einer alternativen Ausgestaltung ist vorgesehen, den variablen Schnittspalt mit der Technik des schräggeschliffenen Stempels zu vereinen, um so eine sich weiter reduzierende Schnittkraft zu erhalten. Hierbei ist insbesondere vorgesehen, die Bereiche ausgehend von den u1 - Ecken in Richtung der u2 - Bereiche anzuschrägen, was ebenfalls in Figur 16 in der Seitenansicht des Stempels 11 zu sehen ist. In einer weiteren vorteilhaften Ausgestaltung ist vorgesehen, das zu schneidende Blech so fest, mittels der in Figur 12 dargestellten Niederhalter 3 oben und unten einzuspannen, dass an der Einspannstelle eine Kerbe entsteht. Auf diese Weise wird die notwendige Schnittkraft. etwa um den Faktor 1,2 bis 2,2 reduziert. Das in Figur 3 dargestellte und so genannte Biege- oder Hartschneiden, bei dem der Hebel 1 dem drei- bis achtfachen der zu schneidenden Blechdicke s entspricht, vorzugsweise aber der sechsfachen Blechstärke, ist geeignet, die Schnittkraft auf etwa ein Sechstel der bislang bekannten Werte zu reduzieren. In einer vorzugsweisen Weiterentwicklung ist vorgesehen, das vorher beschriebene Hart- oder Biegeschneiden mit der ebenfalls weiter oben beschriebenen Technik des variablen Schnittspaltes zu kombinieren, um auf diese Weise die Schnittkraft auf etwa ein Neuntel der bekannten Werte zu verringern. In einer weiteren erfindungsgemäßen Ausgestaltung ist vorgesehen, den variablen Schnittspalt das Hart- bzw. Biegeschneiden und den ziehenden Schnitt(schräger Stempel) zu kombinieren, um so die Schnittkraft auf, etwa ein Zwölftel der bisher üblichen Werte zu senken, denn "die Schneidkraft darf die auf dem Leistungsschild der Presse angegebene Nennpresskraft, innerhalb des Nennkraftwegs nicht überschreiten, da sonst die Maschine überlastet wird"(H.d.U., S. 274). Die eingangs gestellte Aufgabe wird mittels der vorstehenden Weiterentwicklungen vollständig gelöst q.e.d.

**Patentansprüche**

1. Verfahren zum Stanzen von hochfesten Blechenen, Insbesondere Blechen(3) aus martensitischem Strahl, wobei das Werkstück (3) bei dem Verfahren vor und während eines Schervorgangs einer Biegebeanspruchung ausgesetzt wird, insbesondere im Bereich der zu erzeugenden Schnittkontur (8).

2. Verwendung einer Vorrichtung zum Biegeschneiden eines Werkstücks zur Durchführung des Verfahrens nach Anspruch 1, mit einer Auflagefläche (16) zur Auflage des Werkstücks (3), die eine der gewünschten Schnittkontur (8) angepasste Kante (18) aufweist), mit einem Schneidmesser (11), das eine der Schnittkontur (8) angepasste Schneidkante (12) aufweist, und mit einer Vorbiegeeinrichtung (19), die in einem seitlichen Abstand zu der Schnittkontur (8) angeordnet und dazu eingerichtet ist, das Werkstück mit einem Biegemoment und dadurch im Bereich der Schnittkontur (8) mit einer Zugspannung zu belasten, bevor das Schneidmesser (11) in das Werkstück (3) eindringt.

3. Presse (1) zum Stanzen von hochfesten Blechen, insbesondere aus martensitischem Stahl, mit einen Pressengestell, zu dem ein Pressentisch (4) zur Aufnahme eines Unterwerkzeuges (12) gehört und in dem ein Stößel (9) beweglich gelagert ist, der mit einer Antriebseinrichtung (6) in Verbindung steht und ein Oberwerkszeug (11) trägt, mit einer steuerbaren Blechhalteeinrichtung (21), die zu dem Werkzeug (10) gehört und die das Werkstück (16) während des Umformvorgangs gegen das Unterwerkzeug (12) presst und sich dazu mit einem Ende an dem Stößel (9) und mit ihrem anderen Ende auf dem Werkstück (16) abstützt, mit einer Steuereinrichtung (51, 53), die der Blechhalteeinrichtung (21) zugeordnet ist und die die von der Blechhalteeinrichtung (21) ausgeübte, zwischen dem Stößel (9) und dem Werkstück (16) wirkende Kraft beeinflusst um die von der Blechhalteeinrichtung ausgeübte Kraft während des Werkstückdurchbruchs nochmals zu erhöhen.

4. Presse nach Anspruch 3, **dadurch gekennzeichnet, dass** die Steuereinrichtung (51) eine Ventileinrichtung (48) zur Steuerung des Hydraulikflusses aus dem Hydraulikzylinder (19, 20) sowie eine Sensoreinrichtung (50) umfasst, die die Ventileinrichtung (48) steuert.

5. Presse nach Anspruch 4, **dadurch gekennzeichnet, dass** die Sensoreinrichtung (50) dazu eingerichtet ist, das Überschreiten eines Geschwindigkeitsschwellwertes der Relativbewegung zwischen dem Oberwerkzeug (11) und dem Werkstück (16) zu erfassen.

6. Presse nach Anspruch 5, **dadurch gekennzeichnet, dass** die Ventileinrichtung (48) und die Sensoreinrichtung (50) durch ein durchflussempfindliches Ventil gebildet sind.

7. Presse nach Anspruch 3 **dadurch gekennzeichnet, dass** die Steuereinrichtung (51) dazu eingerichtet ist, die von der Blechhalteeinrichtung (21) ausgeübte Kraft sprunghaft zu erhöhen, wenn das Überschreiten eines Geschwindigkekeitsschwellwertes der Relativbewegung zwischen dem Oberwerkzeug (11) und dem Werkstück (16) festgestellt wird.

8. Presse nach Anspruch 4, **dadurch gekennzeichnet, dass** die Steuereinrichtung (51,53) mit einer Gebereinrichtung (54, 55) zur Erfassung der aktuellen Stößelposition oder einer anderen Größe verbunden ist, die mit der Stößelposition in einem eindeutigen Zusammenhang steht.

9. Presse nach Anspruch 3, **dadurch gekennzeichnet, dass** die Steuereinrichtung (51,53) eine sprungartige Änderung der von der Blechhalteeinrichtung (21) aufgebrachten Kraft nur für einen abgegrenzten Abschnitt des Stößelweges freigibt.

**Claims**

1. Method for blanking high-tensile sheets, in particular sheet metals (3) of martensite steel, wherein the work piece (3) is subjected to a bending stress prior and during a shearing process in particular in the area of the cutting contour (8) to be created.

2. Use of an apparatus for bending cutting of a workpiece for executing the method of claim 1 having a support surface (16) for supporting the workpiece (3), which has an edge (18) adjusted to a desired cutting contour (8), a cutting knife (11) having a cutting edge (12) adjusted to the desired cutting contour (8), and a pre-bending device (19), provided at a lateral distance to the cutting contour (8) and configured to load the workpiece with a bending moment and thereby with a tensile stress in the area of the cutting contour (8) before the cutting knife (11) penetrates the workpiece (3).

**3.** A press (1) for punching high-tensile sheets, in particular sheet metals (3) of martensite steel, comprising a press support to which a press table(4) for holding a lower tool(12) belongs, and in which a push-rod(9) is movably mounted that is in communication with a drive device(6) and carries an upper tool (11), a controllable sheet metal holding device(21), which belongs to the tool(10) and presses the workpiece (16) against the lower tool(12) during the forming process, and which, therefore, supports itself with its other end against the workpiece(16), a control device (51, 53) assigned to the sheet metal holding device (21) and influencing the force exerted by the sheet metal holding device(21) and acting between the push-rod(9) and the workpiece(16) to increase the force excerted by the sheet metal holding device during the breakthrough of the workpiece.

**4.** The press according to claim 3, wherein the control device(51) comprises a valve device(48) for controlling the hydraulic flow from the hydraulic cylinder(19, 20) as well as a sensor device(50),which controls the valve device(48).

**5.** The press according to claim 4, wherein the sensor device(50) is configured to detect when a velocity threshold value of a relative movement between the upper tool(11) and the workpiece(16) is exceeded.

**6.** The press according to claim 5,wherein the the valve device(48) and the sensor device(50) are formed by a valve sensitive to flow.

**7.** The press according to claim 3, wherein the control device(51) is configured to increase the force excerted by the sheet metal holding device(21) by leaps and bounds when it is detected that a velocity threshold value of the relative movement between the upper tool(11) and the workpiece(16) is exceeded.

**8.** The press according to claim 4, wherein the control device (51, 53) is connected with a sensor for determining the current position of the push rod or another parameter, which is related unambiguously to the position of the push rod.

**9.** The press according to claim 3, wherein the control device(51, 53) releases a stepwise change of the force provided by the sheet metal holding device (21) only for a limited section of the path of the push-rod.

**Revendications**

**1.** Procédé au découpage des tôles très résistantes, en particulier à des tôles de l'acier martensitique et la pièce à usiner est exposée au procédé devant et pendant un processus cisaillement d'un effort de flexion, en particulier dans le domaine le contour de coupe à produire.

**2.** Dispositif au tranchant de flexion d'une pièce à usiner pour la réalisation du procédé selon la revendication 1 avec une surface d'appui à l'édition(impôt) de la pièce à usiner qui montre l'un le contour de coupe souhaité le bord adapté, avec un couteau de cran qui montre l'un le contour de coupe le bord de cran adapté, et avec une installation de préflexion qui est disposée dans une distance latérale au contour de coupe et est arrangée de charger(débiter) la pièce à usiner d'un moment de flexion et ainsi dans le domaine le contour de coupe avec une tension de train avant que le couteau de cran pénètre dans la pièce à usiner.

**3.** Presse au découpage des tôles très résistantes, en particulier de l'acier martensitique, avec une étagère de presses à laquelle une table de presses est entendue à l'accueil(à la prise de vues) d'un sous-outil et est stockée mobile dans un pilon qui se trouve en contact avec une installation de stimulation et porte un supérieur outil, avec une installation d'arrêts de tôle maniable qui appartient à l'outil et qui presse la pièce à usiner pendant l' operation de formage contre le sous-outil et s'appuie en plus à une fin au pilon et à son(leur) autre fin sur la pièce à usiner, avec une installation d'impôt qui est classée dans l'installation d'arrêts de tôle et de l'installation d'arrêts de tôle exercé d'augmenter encore une fois la force agissant influencé de la force exercée par l'installation d'arrêts de tôle pendant la rupture de pièce à usiner entre le pilon et la pièce à usiner.

**4.** Presse selon la revendication 3 **caractérisée en ce que** l'installation d'impôt embrasse(contient) une installation de soupape à la conduite de la rivière hydraulique du cylindre hydraulique ainsi qu'une installation de détecteur qui règle l'installation de soupape.

**5.** Presse selon la revendication 4 **caractérisée en ce que** l'installation de détecteur est arrangée en plus, le fait de dépasser une valeur de seuil de vitesse du mouvement relatif entre un supérieur outil et la pièce à usiner.

**6.** Presse selon la revendication 5 **caractérisée en ce que** l'installation de soupape et l'installation de détecteur sont formées par une soupape sensible aux écoulements.

**7.** Presse selon la revendication 3, **caractérisée en ce que** l'installation d'impôt est arrangée que d'augmenter la force exercée de l'installation d'arrêts de tôle inconstant(précipité), si le fait de dépasser une valeur de seuil de vitesse du mouvement relatif est établi entre un supérieur outil et la pièce à usiner.

8. Presse selon la revendication 4, **caractérisée en ce que** l'installation d'impôt est liée(connectée) à une installation de donneur à l'enregistrement de la position de pilon actuelle ou d'une autre grandeur(taille) qui se trouve avec la position de pilon en liaison(rapport) univoque.

9. Presse selon la revendication 3, **caractérisée en ce que** l'installation d'impôt autorise(libère) un changement(une modification) en forme de saut de la force introduite(trouvée) par l'installation d'arrêts de tôle seulement pour une section séparée du chemin de pilon.

EP 1 758 697 B1

Europäisches Patentamt
Dienststelle Berlin

3 0. NOV. 2006

Anl.:

4

Fig. 1

Fig. 2

Fig. 3

Fig. 4

Fig. 5

Fig. 6

Fig. 7

Fig. 8

Fig. 9

**Figur 12**

$$\sigma_v = \sqrt{\sigma^2 + 3\tilde\tau^2}$$

EP 1 758 697 B1

Figur 10b

21

Fig. 10a

EP 1 758 697 B1

EP 1 758 697 B1

Figur 11

Figur 13

Figur 14

EP 1 758 697 B1

α-Sensor

Figur 15 a

α-Sensor

Figur 15b

FIG.16

EP 1 758 697 B1

Hydraulik
Unit

300

Niederhalt

Niederhalt
+ Auswerferzylinder

Auswerfer
Kolben

Schwebeplatte

2 stufiger Kombi – Zylinder

Figur 17

Niederhalter Ø 100 / [ mm ]

Auswerfer Ø 50 / [ mm ]

28

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- FR 2690097 A

- DE 10252625 A1

**In der Beschreibung aufgeführte Nicht-Patentliteratur**

- Handbuch der Umformtechnik H.d.U. Springer Verlag, 1996, 281